# EUROPÄISCHE PATENTSCHRIFT

(11) **EP 2 936 507 B1**
(45) Veröffentlichungstag und Bekanntmachung des Hinweises auf die Patenterteilung: **21.10.2020**
(21) Anmeldenummer: 13811909.4
(22) Anmeldetag: 18.12.2013
(51) Int. Cl.: B25F 5/02, H01F 3/08, H01F 27/255, H01F 38/14

(54) **INDUKTIVLADESPULENVORRICHTUNG**
INDUCTION CHARGING COIL DEVICE
ENSEMBLE BOBINE DE CHARGE INDUCTIVE

(30) Priorität: 21.12.2012 DE 102012112883; 21.12.2012 DE 102012112876; 21.12.2012 DE 202012105016 U; 21.12.2012 DE 102012112878; 21.12.2012 DE 102012112992; 17.12.2013 DE 102013226224
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); MACK, Juergen, 73035 Goeppingen (DE); KRUPEZEVIC, Dragan, 70565 Stuttgart (DE); AICHELE, Wilfried, 71364 Winnenden (DE); DIETZEL, Friederike, 70469 Stuttgart (DE)
(86) Internationale Anmeldenummer: PCT/EP2013/077155
(87) Internationale Veröffentlichungsnummer: WO 2014/096043

(56) Entgegenhaltungen:
- EP-A1- 2 172 952
- WO-A1-2011/032803
- WO-A1-2012/128027
- FR-A1- 2 976 152
- US-A1- 2010 007 215
- US-A1- 2011 050 382
- US-A1- 2011 210 696

## Beschreibung

### Stand der Technik

Es sind bereits Induktivladespulenvorrichtungen, insbesondere Handwerkzeuginduktivladespulenvorrichtungen, mit wenigstens einer Spuleneinheit und wenigstens einer Kerneinheit bekannt.

### Offenbarung der Erfindung

Die Erfindung wird im Anspruch 1 definiert und geht aus von einem Handwerkzeugakkupack mit einer Induktivladespulenvorrichtung, insbesondere Handwerkzeuginduktivladespulenvorrichtung, mit wenigstens einer Spuleneinheit und wenigstens einer Kerneinheit.

Es wird vorgeschlagen, dass die Kerneinheit zumindest teilweise von in einem Bindemittel eingebetteten mikroskopischen Kernelementen gebildet wird. Unter einer "Spuleneinheit" soll in diesem Zusammenhang insbesondere eine Einheit verstanden werden, die zumindest eine Leiterschleife mit zumindest einer von einem Leiter gebildeten Wicklung aufweist. Die Spuleneinheit ist dazu vorgesehen, in zumindest einem Betriebszustand eine elektrische Energie zu senden und/oder vorzugsweise zu empfangen. Bevorzugt weist die Spuleneinheit einen Wicklungsträger auf. Der Wicklungsträger kann insbesondere dazu vorgesehen sein, die zumindest eine Leiterschleife zu stützen. Die Spuleneinheit ist dazu vorgesehen, empfangene Energie, über eine Ladeelektronik, einer Zelleneinheit eines Akkus zuzuführen. Alternativ kann die Handwerkzeuginduktivladespulenvorrichtung dazu vorgesehen sein, Energie an eine weitere Induktivladespulenvorrichtung zu senden. Vorzugsweise ist die Spuleneinheit dazu vorgesehen, einen elektrischen Wechselstrom in ein magnetisches Wechselfeld umzuwandeln und/oder umgekehrt. Insbesondere kann die Induktivladespulenvorrichtung mit einer weiteren Induktivladespulenvorrichtung ein induktives Energieübertragungssystem bilden. Bevorzugt weist das Wechselfeld eine Frequenz von 10 - 500 kHz, besonders bevorzugt von 100 - 120 kHz, auf. Unter einer "Handwerkzeuginduktivladespulenvorrichtung" soll in diesem Zusammenhang insbesondere eine Induktivladespulenvorrichtung einer Handwerkzeugmaschine, eines Handwerkzeugmaschinenakkus oder eines Handwerkzeugmaschinenakkuladegeräts verstanden werden. Unter einer "Handwerkzeugmaschine" soll in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer und/oder ein Multifunktionswerkzeug, oder ein Gartengerät wie eine Hecken-, Strauch- und/oder Grasschere, verstanden werden. Unter einer "Kerneinheit" soll in diesem Zusammenhang insbesondere eine Vorrichtung verstanden werden, die dazu vorgesehen ist, ein elektromagnetisches Wechselfeld zu bündeln. Insbesondere kann die Kerneinheit zumindest teilweise von einem Magnetwerkstoff gebildet sein. Unter einem "Magnetwerkstoff" soll in diesem Zusammenhang vorzugsweise ein ferrimagnetischer, insbesondere weichmagnetischer, Werkstoff verstanden werden. Alternativ ist es auch denkbar, ferromagnetische und/oder antiferromagnetische Werkstoffe zu verwenden. Unter einem "Kernelement" sollen in diesem Zusammenhang insbesondere Bestandteile der Kerneinheit verstanden werden, die zumindest im Wesentlichen verantwortlich für die magnetischen Eigenschaften der Kerneinheit sind. Die Kernelemente sind bevorzugt zumindest überwiegend von dem Magnetwerkstoff gebildet. Unter "mikroskopisch" soll in diesem Zusammenhang insbesondere ein Kernelement verstanden werden, dessen größte Erstreckung kleiner als 1mm, bevorzugt kleiner als 0,1mm, besonders bevorzugt kleiner als 0,01mm ist. Insbesondere können die mikroskopischen Kernelemente als Pulver eines Magnetwerkstoffs gebildet sein. Unter einem "Bindemittel" soll in diesem Zusammenhang insbesondere ein Bindemittel verstanden werden, das dazu vorgesehen ist, mit den Kernelementen eine bevorzugt stoffschlüssige Verbindung einzugehen. Bindemittel und Kernelemente können ein Verbundmaterial bilden. Bevorzugt wird das Bindemittel von einem Kunststoffmaterial gebildet, wie insbesondere einem Thermoplast oder einem Kunstharz. Die Kernelemente können dem Bindemittel beigemengt werden, so dass die Kerneinheit durch einen Gießprozess und/oder einen Spritzgussprozess gebildet werden kann. Alternativ können die Kernelemente mit dem Bindemittel umgossen werden. Die Kernelemente können mit dem Bindemittel vergossen sein und/oder die Kernelemente können mit dem Bindemittel zumindest teilweise überzogen werden. Die Kerneinheit kann eine Wanne aufweisen, in der die Kernelemente mit dem Bindemittel vergossen werden. Alternativ kann die Kerneinheit nach dem vergießen aus der Wanne entformt werden, so dass die Wanne zum gießen mehrerer Kerneinheiten genutzt werden kann. Bevorzugt können die Kernelemente in einem als Gießharz ausgebildeten Bindemittel vergossen sein, insbesondere einem Epoxidharz. Alternativ kann das Bindemittel linear polymerisierende Monomerbausteine und/oder Oligomerbausteine eines Thermoplasts wie Lactame und/oder cyclische Oligomere von Butylenterephthalat enthalten. Das Bindemittel kann die Kernelemente umgeben und zu einem Polymer polymerisieren, wie insbesondere einem Polyamid. Dieser Vorgang kann schneller erfolgen als ein Aushärten eines Epoxidharzes. Eine Herstellung und/oder Aushärtung der Kerneinheit kann in einer besonders kurzen Zeitspanne erfolgen. Eine Herstellung der Kerneinheit kann besonders einfach sein. Insbesondere kann die Kerneinheit bevorzugt durch einen Guss- und/oder Spritzgussprozess in einer gewünschten Form hergestellt werden. Die Kerneinheit kann durch Urformen gebildet werden. Eine Nachbearbeitung der Kerneinheit kann bevorzugt entfallen oder besonders einfach sein. Das Bindemittel kann besonders bruchfest sein. Die Kerneinheit kann besonders zäh und bruchfest sein. Die Kerneinheit kann besonders widerstandsfähig gegenüber mechanischen Belastungen sein, insbesondere im Vergleich zu einer von einem Sintermaterial in einem Sinterprozess gebildeten Kerneinheit. Ein Zerbrechen der Kerneinheit kann erschwert sein. Eine Lebensdauer und/oder Robustheit der Kerneinheit kann besonders hoch sein.

Alternativ wird vorgeschlagen, dass die Kerneinheit eine Vielzahl von Kernelementen aufweist, die zumindest teilweise von Sinterstücken gebildet werden. Unter einem "Sinterstück" soll in diesem Zusammenhang insbesondere ein Bruchstück und/oder Granulat eines gesinterten Werkstoffs, insbesondere eines gesinterten Ferritmaterials, verstanden werden. Bevorzugt werden die Sinterstücke zu mindestens 70%, vorteilhaft zu mindestens 80%, besonders vorteilhaft zu mindestens 90%, von einem Mangan-Zink (MnZn)- und/oder Nickel-Zink (NiZn)-Sinterwerkstoff gebildet. Die Sinterstücke können besonders vorteilhafte magnetische Eigenschaften aufweisen. Die Sinterstücke können eine unregelmäßige Bruchform aufweisen. Die Kerneinheit kann zumindest im Wesentlichen die vorteilhaften Eigenschaften einer aus einem gesinterten Ferritmaterial gebildeten Kerneinheit aufweisen. Insbesondere können magnetische Verluste gering sein. Die Kerneinheit kann eine hohe Permeabilität aufweisen. Vorzugsweise kann eine Permeabilitätszahl µ der Kerneinheit zumindest in Teilbereichen der Kerneinheit größer als 100, bevorzugt größer als 1000, besonders bevorzugt größer als 5000 sein. Die Kerneinheit kann besonders kostengünstig sein. Insbesondere kann die Kerneinheit kostengünstiger sein als eine Kerneinheit, die von einem Sinterstück und/oder einer geringen Zahl von Sinterstücken gebildet wird. Unter einer "geringen" Zahl soll in diesem Zusammenhang eine Zahl kleiner als 50, bevorzugt kleiner als 25, besonders bevorzugt kleiner als 10, verstanden werden. Bevorzugt können die Kernelemente in mit dem Bindemittel vergossen sein. Das Bindemittel kann mit den Kernelementen eine besonders bruchfeste Einheit bilden, insbesondere kann eine Bruchfestigkeit höher sein als bei einer Kerneinheit, die von einem Sinterbauteil gebildet ist. Alternativ können die Kernelemente mit einem als Lack ausgebildeten Bindemittel überlackiert, das heißt überzogen, sein. Die Kernelemente können miteinander verkleben. Es kann besonders wenig Bindemittel benötigt werden. Zwischen den Kernelementen können Hohlräume zumindest teilweise frei bleiben. Die Kerneinheit kann eine besonders geringe Masse aufweisen. Das Bindemittel kann zusätzlich mikroskopische Kernelemente enthalten. Die magnetischen Eigenschaften der Kerneinheit können weiter verbessert werden. Es können besonders einfach großflächige und/oder großvolumige Kerneinheiten gebildet werden. Eine Schrumpfung von Sinterbauteilen kann unberücksichtigt bleiben. Eine Soll-Geometrie der Kerneinheit kann besonders einfach sichergestellt werden. Besonders bevorzugt können die Sinterstücke von Bruchstücken recycelter Sinterbauteile, insbesondere Kerneinheiten, gebildet werden. Beschädigte und/oder ausgediente Kerneinheiten können vorteilhaft wiederverwendet werden und Kernelemente der erfindungsgemäßen Kerneinheit bilden. Ressourcen können eingespart werden. Die Sinterstücke können kostengünstig sein. Bevorzugt weisen die Kernelemente einen mittleren Durchmesser auf, der maximal 2/3 einer Kernhöhe entspricht. Unter einer "Kernhöhe" soll in diesem Zusammenhang insbesondere eine Höhe der Kerneinheit in Richtung der Wicklungsachse der Spuleneinheit verstanden werden. Bevorzugt soll bei einer Kerneinheit mit Bereichen mit differierender Höhe unter der "Kernhöhe" die geringste Höhe der Kerneinheit verstanden werden. Es kann wirksam sichergestellt werden, dass sich die Kernelemente bei der Herstellung der Kerneinheit innerhalb der Kernhöhe anordnen. Es kann vermieden werden, dass Kernelemente aus dem Kern herausragen.

Weiter wird vorgeschlagen, dass die Kerneinheit einen Kernmantel aufweist, der zu einer Fixierung der Kernelemente vorgesehen ist. Unter einem "Kernmantel" soll in diesem Zusammenhang insbesondere eine Hülle verstanden werden, die die Kernelemente umhüllt. Insbesondere kann der Kernmantel von einer Folie und/oder einem dünnwandigen Elastomer und/oder Thermoplast gebildet sein. Bevorzugt kann die Kerneinheit durch ein- oder beidseitiges Tiefziehen einer Thermoplastfolie gebildet werden, wobei die Thermoplastfolie die Kernelemente umschließt. Alternativ können die Kernelemente in einem von einem Schrumpfschlauch gebildeten Kernmantel eingeschrumpft sein. Die Kernelemente können von einem Folienschlauch eingehüllt werden, der durch ein Heißsiegelverfahren verschlossen wird. Ein Bindemittel kann entfallen. Des Weiteren könnten die Kernelemente in einem Kernmantel durch eine Vakuumierung des Kernmantels fixiert sein. Ferner könnte innerhalb des Kernmantels ein Stabilisierungsmittel angeordnet sein, das den Kernmantel und die Kernelemente im Wesentlichen in Soll-Geometrie hält. Insbesondere weisen die Kernelemente abgerundete Kanten auf. Alternativ könnte der Kernmantel ausreichend stabil ausgebildet sein. Die Kernelemente der Kerneinheit können durch den Kernmantel in einer Soll-Geometrie und/oder einer gewünschten räumlichen Anordnung gehalten werden. Die Kernelemente können innerhalb des Kernmantels zumindest eine eingeschränkte Beweglichkeit aufweisen. Die Kerneinheit kann flexibel und/oder formbar sein. Eine Form einer von in einem Kernmantel eingehüllten Kernelementen gebildeten Kerneinheit kann bei einer Montage der Induktivladespulenvorrichtung angepasst werden.

Weiter wird vorgeschlagen, dass die Kerneinheit Bereiche mit einer differierenden Kernmaterialzusammensetzung aufweist. Unter einer "Kernmaterialzusammensetzung" soll in diesem Zusammenhang insbesondere eine chemische und/oder physikalische Zusammensetzung von einen Bereich der Kerneinheit bildenden Kernmaterialien verstanden werden, wie insbesondere eine Zusammensetzung von den Bereich der Kerneinheit bildenden Magnetmaterialien und Bindemitteln. Unter einem "Bereich" soll in diesem Zusammenhang insbesondere ein bevorzugt stoffschlüssig verbundener, zusammenhängender Bereich der Kerneinheit verstanden werden, insbesondere eine Schicht der Kerneinheit. Vorteilhaft beträgt ein Volumen eines Bereichs zumindest 5%, bevorzugt zumindest 10%, besonders bevorzugt zumindest 15%, eines Gesamtvolumens der Kerneinheit. Die Kernmaterialzusammensetzung kann besonders gut an verschiedene Anforderungen innerhalb der Kerneinheit abgestimmt werden. Insbesondere kann die Kernmaterialzusammensetzung in Bereichen, die bei einem Betrieb der Spuleneinheit eine hohe Feldstärke aufweisen, besonders gut geeignet sein, ein magnetisches Feld zu bündeln. Bevorzugt kann die Kernmaterialzusammensetzung in Bereichen mit einer hohen mechanischen Belastung, wie im Bereich von Lagermitteln, die dazu vorgesehen sind, die Kerneinheit zu lagern, besonders bruchfest sein. Bevorzugt kann die Kerneinheit in Bereichen ohne spezielle Anforderungen besonders kostengünstig sein. Der Fachmann kann die Kernmaterialzusammensetzung insbesondere im Hinblick auf funktionelle Kosten sowie Materialkosten optimal wählen. Die Kerneinheit kann besonders effizient und/oder haltbar und/oder kostengünstig sein.

Weiter wird vorgeschlagen, dass die Kerneinheit zumindest zwei Kernmaterialien aufweist, die differierende Permeabilitäten aufweisen. Die Kerneinheit kann unterschiedliche Typen von Magnetmaterialien und/oder Kernelementen aufweisen, die jeweils aus einem Material oder einer Materialmischung mit einer differierenden Permeabilität bestehen. Kernelemente und Bindemittel können unterschiedliche Permeabilitäten aufweisen. Die magnetischen Eigenschaften der Kerneinheit können besonders gut abgestimmt werden.

In einer besonders vorteilhaften Ausgestaltung der Erfindung wird vorgeschlagen, dass die Kerneinheit zumindest zwei Kernmaterialien aufweist, die differierende Dichten und/oder Elastizitätsmodule aufweisen. Insbesondere können die Dichten und/oder die Elastizitätsmodule von Magnetmaterialien und/oder Kernelementen und/oder Bindemitteln differieren. Besonders bruchgefährdete Bereiche der Kerneinheit können zumindest überwiegend von einem besonders elastischen Kernmaterial gebildet sein. Wenig beanspruchte Bereiche der Kerneinheit und/oder Bereiche der Kerneinheit, die in einem Betrieb eine geringe magnetische Feldstärke aufweisen, können von einem Kernmaterial mit besonders niedriger Dichte gebildet sein. Die Kerneinheit kann besonders bruchsicher sein. Die Kerneinheit kann eine besonders niedrige Masse aufweisen. Weiter wird vorgeschlagen, dass zumindest ein Bereich der Kerneinheit zumindest im Wesentlichen von Luft gebildet ist. Insbesondere kann die Kerneinheit zumindest eine Luftschicht und/oder zumindest einen Lufteinschluss aufweisen. Insbesondere können Bereiche der Kerneinheit, die im Betrieb eine geringe magnetische Feldstärke aufweisen, Lufteinschlüsse und/oder Luftschichten aufweisen. Die Kerneinheit kann eine besonders geringe Masse aufweisen. Die Kerneinheit kann besonders kostengünstig sein. Für eine Herstellung der Kerneinheit kann besonders wenig Kernmaterial notwendig sein.

Weiter wird vorgeschlagen, dass zumindest zwei Bereiche mit einer differierenden Kernmaterialzusammensetzung in einer Dickenrichtung der Kerneinheit nebeneinander angeordnete Schichten bilden. Unter einer "Dickenrichtung" der Kerneinheit soll in diesem Zusammenhang insbesondere die Richtung der Kerneinheit verstanden werden, in der die Kerneinheit die geringste Ausdehnung aufweist. Vorteilhaft ist die Dickenrichtung zumindest im Wesentlichen die Richtung einer Wicklungsachse der Spuleneinheit. Unter einer "Wicklungsachse" soll in diesem Zusammenhang insbesondere eine Achse verstanden werden, die im Mittel durch ein Zentrum der Wicklungen der Leiterschleifen der wenigstens einen Spuleneinheit der Induktivladespulenvorrichtung verläuft. Unter "zumindest im Wesentlichen" soll in diesem Zusammenhang insbesondere eine Abweichung von weniger als 10°, bevorzugt weniger als 5°, verstanden werden. Unter einer "Schicht" soll in diesem Zusammenhang insbesondere ein zusammenhängender flächiger Bereich verstanden werden, der sich senkrecht zur Dickenrichtung über mehr als 80%, bevorzugt mehr als 90%, der Kerneinheit erstreckt. Vorteilhaft können der Spuleneinheit zugewandte Schichten der Kerneinheit eine Kernmaterialzusammensetzung mit einer besonders hohen Permeabilität und/oder mit einem besonders großen Anteil an Magnetmaterialien aufweisen. Vorteilhaft können von der Spuleneinheit abgewandte Schichten der Kerneinheit eine besonders bruchfeste und/oder leichte und/oder kostengünstige Kernmaterialzusammensetzung aufweisen. Die Kerneinheit kann besonders vorteilhafte magnetische und/oder mechanische Eigenschaften aufweisen. Weiter wird vorgeschlagen, dass zumindest zwei Bereiche mit einer differierenden Kernmaterialzusammensetzung untereinander stoffschlüssig verbunden sind. Vorteilhaft kann ein Bereich als Beschichtung eines anderen Bereichs ausgebildet sein. Insbesondere kann eine Schicht eines Kernmaterials mit besonders hoher Permeabilität in einem Beschichtungsverfahren auf eine Schicht eines Kernmaterials mit niedrigerer Permeabilität aufgebracht sein, die als Trägerschicht dient. Die Beschichtung kann von der Trägerschicht besonders gut abgestützt werden. Die Kerneinheit kann besonders robust sein.

Weiter wird vorgeschlagen, dass zumindest zwei Bereiche mit einer differierenden Kernmaterialzusammensetzung radial um die Wicklungsachse der Spuleneinheit angeordnet sind. Vorteilhaft können die Bereiche zumindest im Wesentlichen zylinder- und/oder hohlzylinderförmig um die Wicklungsachse angeordnet sein. Unter "zumindest im Wesentlichen" soll in diesem Zusammenhang eine Abweichung einer Volumenverteilung von weniger als 20%, bevorzugt weniger als 10%, von einer Zylinder- und/oder Hohlzylinderform um die Wicklungsachse verstanden werden. Vorteilhaft können in Richtung der Wicklungsachse neben den Wicklungen der Spuleneinheit angeordnete Bereiche und/oder Bereiche, die einen besonders geringen Abstand zu den Wicklungen aufweisen, eine Kernmaterialzusammensetzung mit einer besonders hohen Permeabilität und/oder mit einem besonders großen Anteil an Magnetmaterialien aufweisen. Vorteilhaft können Bereiche, die in einem Radius um die Wicklungen innerhalb oder außerhalb der Wicklungen angeordnet sind, eine besonders bruchfeste und/oder leichte und/oder kostengünstige Kernmaterialzusammensetzung aufweisen. Die Kerneinheit kann besonders vorteilhafte magnetische und/oder mechanische Eigenschaften aufweisen. Es ist möglich, dass Bereiche radial und in Schichten angeordnet sind, wobei vorteilhaft eine Permeabilität der Bereiche mit zunehmendem Abstand von den Wicklungen der Spuleneinheit abnimmt. Ebenfalls sind Bereiche denkbar, deren Kernmaterialzusammensetzung und/oder Permeabilität sich kontinuierlich verändert, insbesondere deren Permeabilität mit zunehmendem Abstand von den Wicklungen kontinuierlich abnimmt. Die magnetischen Eigenschaften der Kerneinheit können besonders vorteilhaft sein.

Weiter wird vorgeschlagen, dass die Kerneinheit zumindest im Wesentlichen eine plattenförmige oder wannenförmige Gestalt aufweist. Bevorzugt kann die Kerneinheit eine Ausdehnung aufweisen, die zumindest einem Durchmesser der Leiterschleifen der Spuleneinheit um eine Wicklungsachse entspricht. Unter einer "Wicklungsachse" soll in diesem Zusammenhang insbesondere eine Achse verstanden werden, die im Mittel durch ein Zentrum der Wicklungen der Leiterschleifen der wenigstens einen Spuleneinheit der Induktivladespulenvorrichtung verläuft. Bevorzugt kann die Kerneinheit die Spuleneinheit zumindest im Wesentlichen ausnehmungsfrei überdecken. Die Kerneinheit kann ein magnetisches Wechselfeld besonders wirksam im Bereich der Spuleneinheit bündeln.

Weiter wird vorgeschlagen, dass die Kernelemente einen mittleren Durchmesser aufweisen, der maximal 2/3 einer Kernhöhe entspricht. Unter einer "Kernhöhe" soll in diesem Zusammenhang insbesondere eine Höhe der Kerneinheit in Richtung der Wicklungsachse der Spuleneinheit verstanden werden. Bevorzugt soll bei einer Kerneinheit mit Bereichen mit differierender Höhe unter der "Kernhöhe" die geringste Höhe der Kerneinheit verstanden werden. Es kann wirksam sichergestellt werden, dass sich die Kernelemente bei der Herstellung der Kerneinheit innerhalb der Kernhöhe anordnen. Es kann vermieden werden, dass Kernelemente aus dem Kern herausragen.

Weiter wird vorgeschlagen, dass die Induktivladespulenvorrichtung eine Gehäuseeinheit aufweist, in die Kerneinheit eingegossen und/oder angespritzt ist. Unter einer "Gehäuseeinheit" soll in diesem Zusammehang insbesondere ein Gehäuse verstanden werden, das zumindest die Spuleneinheit und die Kerneinheit zumindest im Wesentlichen umgibt. Die Gehäuseeinheit ist ein Bestandteil eines Handwerkzeugakkupacks. Unter "eingegossen" soll in diesem Zusammenhang insbesondere durch Umhüllen mit einer Vergussmasse stoffschlüssig verbunden und/oder eingebettet verstanden werden. Unter "angespritzt" soll in diesem Zusammenhang insbesondere ein Verfahren verstanden werden, bei dem ein nach einem Erstarren die Kerneinheit bildendes Kernmaterial oder eine die Kerneinheit bildende Kernmaterialmischung in einem flüssigen und/oder plastischen Zustand in einem Gießverfahren, insbesondere einem Spritzgussverfahren, an die Gehäuseeinheit angeformt und/oder in die Gehäuseeinheit eingespritzt wird. Die Kerneinheit kann besonders wirksam mit der Gehäuseeinheit verbunden werden. Die Gehäuseeinheit kann die Kerneinheit besonders gut schützen, insbesondere vor mechanischen Einflüssen. Ein Brechen der Kerneinheit kann vermieden werden. Die Kerneinheit kann besonders sicher an der Gehäuseeinheit gelagert werden. Weitere Bauteile zur Lagerung der Kerneinheit an der Gehäuseeinheit können entfallen. Die Induktivladespulenvorrichtung kann besonders robust und/oder kostengünstig sein. Bevorzugt ist eine Elektronikeinheit zumindest teilweise gemeinsam mit der Kerneinheit eingegossen und/oder zumindest teilweise in die Kerneinheit eingebettet. Vorteilhaft ist die Elektronikeinheit zu mehr als 50%, bevorzugt zu mehr als 80%, besonders bevorzugt vollständig, in die Kerneinheit eingegossen und/oder in die Kerneinheit eingebettet. Unter einer "Elektronikeinheit" soll in diesem Zusammenhang insbesondere eine Vorrichtung verstanden werden, die zumindest ein elektrisches und/oder elektronisches Bauteil aufweist. Die Elektronikeinheit weist eine Ladeelektronik des Handwerkzeugakkupacks auf. Die Elektronikeinheit und die Kerneinheit können gemeinsam in den Aufnahmebereich gebracht und eingegossen werden. Die Elektronikeinheit und die Kerneinheit können besonders dauerhaft mit der Gehäuseeinheit verbunden sein. Die Elektronikeinheit und die Kerneinheit können besonders gut vor Umwelteinflüssen geschützt sein, insbesondere vor Feuchtigkeit und/oder Verunreinigungen. Die Elektronikeinheit kann in die Kerneinheit eingebettet sein. Unter "eingebettet" soll in diesem Zusammenhang insbesondere verstanden werden, dass die Kerneinheit die Elektronikeinheit ganz oder teilweise umgibt. Insbesondere kann die Elektronikeinheit mit dem die Kerneinheit bildenden Kernmaterial und/oder der die Kerneinheit bildenden Kernmaterialmischung umspritzt und/oder umgossen sein. Nach einem Erstarren kann die Kerneinheit mit der Elektronikeinheit eine Einheit bilden. Die Kerneinheit kann die Elektronikeinheit besonders gut schützen. Kerneinheit und Elektronikeinheit können in der Gehäuseeinheit besonders kompakt angeordnet sein. Weiter wird vorgeschlagen, dass die Spuleneinheit zumindest teilweise gemeinsam mit der Kerneinheit eingegossen und/oder zumindest teilweise in die Kerneinheit eingebettet ist. Vorteilhaft ist die Spuleneinheit zu mehr als 50%, bevorzugt zu mehr als 80%, besonders bevorzugt vollständig, in die Kerneinheit eingegossen und/oder in die Kerneinheit eingebettet. Insbesondere kann die Spuleneinheit mit der Elektronikeinheit gemeinsam mit der Kerneinheit eingegossen und/oder in die Kerneinheit eingebettet sein. Die Induktivladespulenvorrichtung mit der Kerneinheit, der Spuleneinheit und der Elektronikeinheit kann mit der Gehäuseeinheit eine besonders robuste Einheit bilden. Die Induktivladespulenvorrichtung kann vor Verschmutzung und/oder Feuchtigkeit und/oder Vibrationen besonders gut geschützt sein. Die Induktivladespulenvorrichtung kann besonders langlebig sein.

Ferner wird vorgeschlagen, dass die Gehäuseeinheit einen taschenartigen Aufnahmebereich für die Spuleneinheit und/oder die Kerneinheit und/oder eine Elektronikeinheit aufweist, wodurch eine besonders einfache Montage der Spulenvorrichtung erreicht werden kann. Die Spuleneinheit und die Kerneinheit können vorteilhaft von der Gehäuseeinheit gelagert werden. Unter einem "taschenartigen Aufnahmebereich" soll insbesondere ein Aufnahmebereich verstanden werden, der in oder am Gehäuse eine Tasche bildet. Unter einer "Tasche" soll in diesem Zusammenhang insbesondere ein zumindest in einem betriebsbereiten Zustand zumindest im Wesentlichen geschlossen ausgebildeter Unterraum der Gehäuseeinheit verstanden werden. Unter "zumindest im Wesentlichen" soll in diesem Zusammenhang insbesondere verstanden werden, dass mehr als 80%, bevorzugt mehr als 90%, besonders bevorzugt mehr als 95%, einer Gesamtoberfläche des Aufnahmebereichs geschlossen ausgebildet sind. Vorteilhaft weist der Aufnahmebereich Montageöffnungen auf, die in einem betriebsbereiten und/oder montierten Zustand durch Abdeckungen verschlossen sein können. Insbesondere kann der Aufnahmebereich durch eine Innenwandung der Gehäuseeinheit in Richtung einer Zelleneinheit begrenzt sein. Unter einer "Zelleneinheit" soll in diesem Zusammenhang insbesondere eine Energiespeichereinheit verstanden werden, die zumindest eine Akkuzelle aufweist, die insbesondere zu einer elektrochemischen Speicherung elektrischer Energie vorgesehen ist. Die Akkuzelle kann eine Bleiakkuzelle, eine NiCd-Akkuzelle, eine NiMh-Akkuzelle, insbesondere jedoch eine lithiumbasierte Akkuzelle sein. Es sind auch weitere, dem Fachmann bekannte Typen von Akkuzellen denkbar. Die Spulenvorrichtung kann besonders gut geschützt sein. Insbesondere können die Spuleneinheit und/oder die Kerneinheit und/oder die Elektronikeinheit und die Zelleneinheit räumlich getrennt sein. Ein Wärmeübertrag und/oder eine Ausbreitung eines elektromagnetischen Wechselfelds vom Bereich der Spuleneinheit und/oder der Kerneinheit und/oder der Elektronikeinheit in angrenzende Bereiche, insbesondere in Richtung der Zelleneinheit, kann reduziert sein. Bevorzugt kann der Aufnahmebereich die Spuleneinheit und die Kerneinheit aufnehmen. Eine Baugruppe kann die Spuleneinheit und die Kerneinheit aufweisen. Eine Montage der Spulenvorrichtung kann besonders einfach sein. Die Spuleneinheit und die Kerneinheit können besonders sicher von der Gehäuseeinheit gelagert werden.

Es wird vorgeschlagen, dass der Aufnahmebereich dazu vorgesehen ist, die Spuleneinheit und/oder die Kerneinheit und/oder die Elektronikeinheit in einer Einschubrichtung zumindest im Wesentlichen parallel zu einer Hauptflächenerstreckung der Kerneinheit und/oder der Elektronikeinheit aufzunehmen. Unter "zumindest im Wesentlichen" soll in diesem Zusammenhang insbesondere eine Abweichung von weniger als 10°, bevorzugt weniger als 5°, verstanden werden. Die Kerneinheit und/oder die Elektronikeinheit kann besonders einfach montiert werden. Bevorzugt weist der Aufnahmebereich zumindest eine Lagereinheit auf, die zu einer Lagerung der Spuleneinheit und/oder der Kerneinheit und/oder der Elektronikeinheit vorgesehen ist. Bevorzugt kann die Lagereinheit eine Translation der Spuleneinheit und/oder Kerneinheit und/oder die Elektronikeinheit in Einschubrichtung frei lassen. Insbesondere kann die Lagereinheit durch zumindest eine Führungsschiene gebildet sein. Die Spuleneinheit und/oder die Kerneinheit und/oder die Elektronikeinheit kann vorteilhaft durch Einschieben in den Aufnahmebereich eingebracht und von der Lagereinheit gelagert werden. Bevorzugt weist die Gehäuseeinheit eine Montageöffnung auf, durch die die Spuleneinheit und/oder die Kerneinheit und/oder die Elektronikeinheit in Einschubrichtung in den Aufnahmebereich eingeschoben werden kann. Bevorzugt kann die Montageöffnung durch ein Abdeckelement verschlossen werden. Eine Montage der Spuleneinheit und/oder der Kerneinheit und/oder der Elektronikeinheit kann besonders einfach sein. Montagematerial und/oder Befestigungsmaterial kann entfallen.

Weiter wird vorgeschlagen, dass Hauptflächen des Aufnahmebereichs zumindest im Wesentlichen geschlossen sind. Insbesondere können die Hauptflächen in einem montierten, betriebsbereiten Zustand der Spulenvorrichtung zumindest im Wesentlichen geschlossen sein. Unter "zumindest im Wesentlichen" soll in diesem Zusammenhang insbesondere verstanden werden, dass die Hauptflächen zu mehr als 75%, bevorzugt zu mehr als 90%, besonders bevorzugt zu mehr als 95%, geschlossen sind. Die Hauptflächen können durch Trennwände geschlossen sein, die Teil der Gehäuseeinheit sind. Eine elektrische Isolation und/oder ein mechanischer Schutz der Spuleneinheit und/oder der Kerneinheit und/oder der Elektronikeinheit kann verbessert sein. Bevorzugt sind Ausnehmungen des Aufnahmebereichs dazu vorgesehen, Verbindungsleiter aufzunehmen, um die Spuleneinheit mit der Zelleneinheit zu kontaktieren. Die Zelleneinheit kann vorteilhaft Energie der Spulenvorrichtung erhalten.

Weiter wird ein System mit zwei Induktivladespulenvorrichtungen vorgeschlagen, bei dem die Kerneinheit zumindest einer der Induktivladespulenvorrichtungen eine Vielzahl von Kernelementen aufweist, die zumindest teilweise von Sinterstücken gebildet werden, wobei die Kernelemente einen mittleren Durchmesser aufweisen, der zumindest 10µm multipliziert mit einem Verhältnis aus einem Kerndurchmesser der Kerneinheit geteilt durch einen Luftspalt in zumindest einem Betriebszustand der Induktivladespulenvorrichtungen beträgt. Eine Induktivladespulenvorrichtung ist Teil eines Handwerkzeugakkupacks. Unter einem "Luftspalt" soll in diesem Zusammenhang ein Abstand der beiden Kerneinheiten bei einer betriebsbereiten Anordnung der beiden Induktivladespulenvorrichtungen zueinander verstanden werden. Insbesondere besteht der Luftspalt zwischen den beiden Kerneinheiten wenn der Handwerkzeugakkupack auf die Handwerkzeugakkuladevorrichtung aufgesetzt wird, um den Handwerkzeugakkupack zu laden. Die Größe des Luftspalts wird von einem Fachmann bei Auslegung der die Induktivladespulenvorrichtungen enthaltenden Handwerkzeugvorrichtungen festgelegt. Die Kernelemente können vorteilhafte magnetische Eigenschaften aufweisen. Es können besonders kleine Kernelemente genutzt werden. Die Kernelemente können besonders kostengünstig sein. Die Kernelemente können sich besonders gut in der Kerneinheit anordnen lassen. Die Kernelemente können in der Kerneinheit besonders dicht angeordnet werden. Eine Mindestgröße der Kernelemente kann gewährleistet sein. Insbesondere können die magnetischen Eigenschaften bei kleineren Kernelementen schlechter sein.

Weiter wird ein Verfahren zur Herstellung einer Kerneinheit mit den beschriebenen Merkmalen vorgeschlagen. Insbesondere kann das Verfahren beinhalten, dass eine Vielzahl mikroskopischer und/oder von Sinterbruchstücken gebildeter Kernelemente mit einem Bindemittel in einen Behälter eingebracht und mit dem Bindemittel vergossen oder überzogen wird und dass das Bindemittel anschließend aushärtet, um eine Kerneinheit zu bilden. Der Behälter kann anschließend entfernt werden oder Teil der Kerneinheit bleiben. Alternativ kann das Verfahren beinhalten, dass eine Vielzahl Kernelemente von einem Packstoff umhüllt wird und in einem weiteren Schritt aus dem Packstoff ein geschlossener Kernmantel um die Kernelemente gebildet wird, indem der Packstoff durch Heißsiegeln verschlossen wird oder aus dem Packstoff und den im Packstoff eingeschlossenen Kernelementen in einem Tiefziehprozess eine Kerneinheit gebildet wird. Die Kerneinheit kann besonders kostengünstig hergestellt werden. Die Kerneinheit kann in einer besonders großen Bandbreite von Formen und Größen hergestellt werden. Die Kerneinheit kann besonders robust und bruchsicher sein.

Weiter wird eine Handwerkzeugvorrichtung mit einer Handwerkzeuginduktivladespulenvorrichtung mit den beschriebenen Merkmalen vorgeschlagen. Hierbei ist die Handwerkzeugvorrichtung von einem Handwerkzeugakkupack gebildet. Die Handwerkzeugvorrichtung kann die genannten Vorteile der Handwerkzeuginduktivladespulenvorrichtung aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Darstellung einer Kerneinheit einer Induktivladespulenvorrichtung,
- Fig. 2: eine schematische Darstellung eines Schnitts durch einen Handwerkzeugakkupack mit der Induktivladespulenvorrichtung,
- Fig. 3: eine schematische Schnittdarstellung einer Kerneinheit einer Induktivladespulenvorrichtung in einem zweiten Ausführungsbeispiel mit einer Vielzahl von von Sinterbruchstücken gebildeten Kernelementen,
- Fig. 4: eine schematische Schnittdarstellung durch einen Handwerkzeugakkupack mit der Induktivladespulenvorrichtung des zweiten Ausführungsbeispiels und einer Handwerkzeugakkuladevorrichtung mit einer weiteren Induktivladespulenvorrichtung,
- Fig. 5: eine schematische Schnittdarstellung einer Anordnung der Kerneinheit des Handwerkzeugakkupacks des zweiten Ausführungsbeispiels und einer Kerneinheit der Handwerkzeugakkuladevorrichtung relativ zueinander in einem betriebsbereiten Zustand,
- Fig. 6: eine schematische Schnittdarstellung eines Herstellverfahrens einer Kerneinheit in einem dritten Ausführungsbeispiel,
- Fig. 7: eine schematische Schnittdarstellung der Kerneinheit des dritten Ausführungsbeispiels,
- Fig. 8: eine schematische Schnittdarstellung eines Handwerkzeugakkupacks mit einer Induktivladespulenvorrichtung in einem vierten Ausführungsbeispiel,
- Fig. 9: eine schematische Schnittdarstellung einer Spuleneinheit und einer Kerneinheit einer Induktivladespulenvorrichtung in einem fünften Ausführungsbeispiel,
- Fig. 10: eine schematische Schnittdarstellung einer Spuleneinheit und einer Kerneinheit einer Induktivladespulenvorrichtung in einem sechsten Ausführungsbeispiel,
- Fig. 11: eine schematische Schnittdarstellung eines Handwerkzeugakkupacks mit einer Induktivladespulenvorrichtung und einer Handwerkzeugakkuladevorrichtung mit einer weiteren Induktivladespulenvorrichtung in einem siebten Ausführungsbeispiel,
- Fig. 12: eine schematische Darstellung eines Bodenteils des Handwerkzeugackupacks mit der Induktivladespulenvorrichtung des siebten Ausführungsbeispiels,
- Fig. 13: eine schematische Darstellung einer Gehäuseeinheit eines Handwerkzeugakkupacks mit einer Induktivladespulenvorrichtung in einem achten Ausführungsbeispiel,
- Fig. 14: eine schematische Schnittdarstellung einer Kerneinheit und einer Spuleneinheit einer Induktivladespulenvorrichtung in einem neunten Ausführungsbeispiel,
- Fig. 15: eine schematische Schnittdarstellung durch einen Handwerkzeugakkupack mit der Induktivladespulenvorrichtung des neunten Ausführungsbeispiels und durch eine Handwerkzeugakkuladevorrichtung mit einer weiteren Induktivladespulenvorrichtung,
- Fig. 16: eine schematische Schnittdarstellung eines Handwerkzeugakkus mit einer Induktivladespulenvorrichtung in einem zehnten Ausführungsbeispiel,
- Fig. 17: eine schematische Schnittdarstellung durch eine Elektronikeinheit, eine Kerneinheit und eine Spuleneinheit der Induktivladespulenvorrichtung des zehnten Ausführungsbeispiels,
- Fig. 18: eine schematische Schnittdarstellung des Handwerkzeugakkus mit der Induktivladespulenvorrichtung des zehnten Ausführungsbeispiels und einer Handwerkzeugakkuladevorrichtung mit einer weiteren Spulenvorrichtung und
- Fig. 19: eine schematische Schnittdarstellung durch eine Elektronikeinheit, eine Kerneinheit und eine Spuleneinheit einer Induktivladespulenvorrichtung in einem elften Ausführungsbeispiel.

### Beschreibung der Ausführungsbeispiele

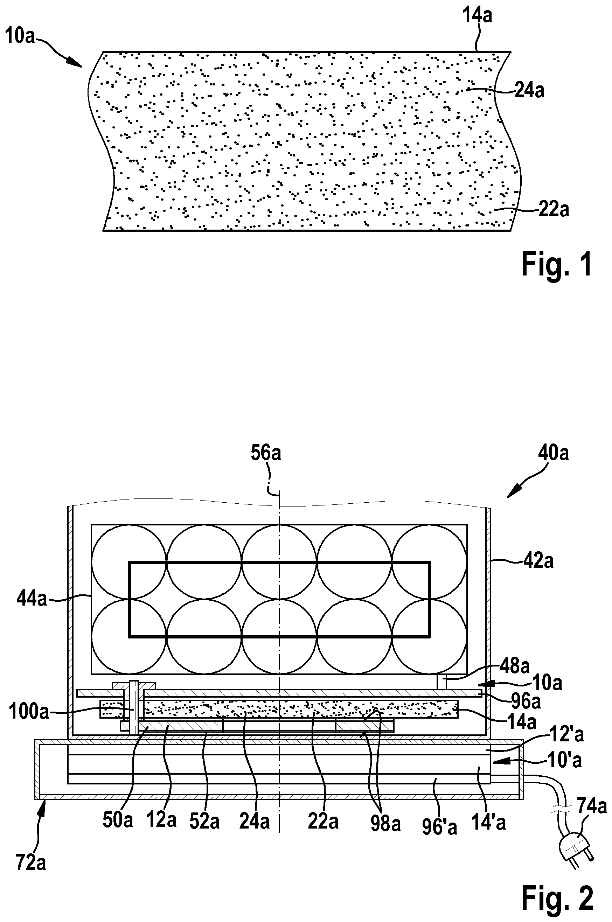

Figur 1 zeigt eine Kerneinheit 14a einer Handwerkzeuginduktivladespulenvorrichtung 10a, die von in einem Bindemittel 22a eingebetteten mikroskopischen Kernelementen 24a gebildet ist. Die Kerneinheit 14a ist zur Bündelung eines magnetischen Wechselfelds einer Spuleneinheit 12a (Figur 2) vorgesehen. Die Kernelemente 24a sind von einem Ferritmaterial gebildet. Die Kerneinheit 14a weist eine plattenförmige Gestalt auf. Die Kernelemente 24a sind als Ferritpulver ausgebildet, wobei das Ferritpulver eine Korngröße von weniger als 0,1 mm aufweist. Die Kernelemente 24a werden dem Bindemittel 22a, das von einem Gießharz gebildet ist, beigemengt. Die Kerneinheit 14a wird in einem Gießprozess durch Gießen des so gebildeten Gemischs aus Bindemittel 22a und Kernelementen 24a hergestellt.

Figur 2 zeigt einen Schnitt durch einen Handwerkzeugakkupack 40a mit einer Induktivladespulenvorrichtung 10a. In einer Gehäuseeinheit 42a ist eine Zelleneinheit 44a angeordnet. Die Zelleneinheit 44a bildet einen Handwerkzeugmaschinenakku, der zu einer Energieversorgung einer Handwerkzeugmaschine vorgesehen ist. Auf einer der Zelleneinheit 44a gegenüberliegenden Seite ist in der Gehäuseeinheit 42a die Induktivladespulenvorrichtung 10a angeordnet. Ausgehend von der Zelleneinheit 44a weist die Induktivladespulenvorrichtung 10a eine Leiterplatte 96a mit einer Ladeelektronik für die Zelleneinheit 44a auf. Angrenzend an die Leiterplatte 96a ist die plattenförmige Kerneinheit 14a angeordnet. Angrenzend an die Kerneinheit 14a ist die Spuleneinheit 12a angeordnet. Die Spuleneinheit 12a weist eine Leiterplatte 52a mit beidseitig einer Trägerschicht 50a angeordneten Leiterbahnen auf. Die Leiterbahnen bilden zwei Leiterschleifen mit Wicklungen 98a um eine Wicklungsachse 56a der Spuleneinheit 12a, die beidseitig der Trägerschicht 50a angeordnet sind. Die Trägerschicht 50a übt die Funktion eines Wicklungsträgers der Wicklungen 98a aus. Alternativ könnten Wicklungen aus zumindest einer auf einen Wicklungsträger aufgewickelten Litze bestehen. Eine durch die Kerneinheit 14a geführte Kontaktierungseinheit 100a verbindet die die Ladeelektronik aufweisende Leiterplatte 96a mit der Spuleneinheit 12a. Die Leiterplatte 96a mit der Ladeelektronik ist über einen Verbindungsleiter 48a mit der Zelleneinheit 44a verbunden.

Um die Zelleneinheit 44a aufzuladen, wird der Handwerkzeugakkupack 40a auf eine Handwerkzeugakkuladevorrichtung 72a aufgesetzt, die eine analog aufgebaute Induktivladespulenvorrichtung 10'a aufweist. Die Handwerkzeugakkuladevorrichtung 72a verfügt über eine Stromversorgung 74a. Wird die Handwerkzeugakkuladevorrichtung 72a mit Strom versorgt, wird die Induktivladespulenvorrichtung 10'a von einem hochfrequenten Wechselstrom von 100 kHz durchflossen, der von einer auf einer Leiterplatte 96'a angeordneten Ladeelektronik erzeugt wird. In einer Spuleneinheit 12'a wird ein magnetisches Wechselfeld erzeugt, welches von einer Kerneinheit 14'a gebündelt und im Wesentlichen in Richtung der Induktivladespulenvorrichtung 10a abgegeben wird. In der Spuleneinheit 12a der Induktivladespulenvorrichtung 10a wird ein Strom induziert, mit dem die Zelleneinheit 44a geladen werden kann.

Die nachfolgende Beschreibung und die Zeichnung elf weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b - k den Bezugszeichen der weiteren Ausführungsbeispiele nachgestellt.

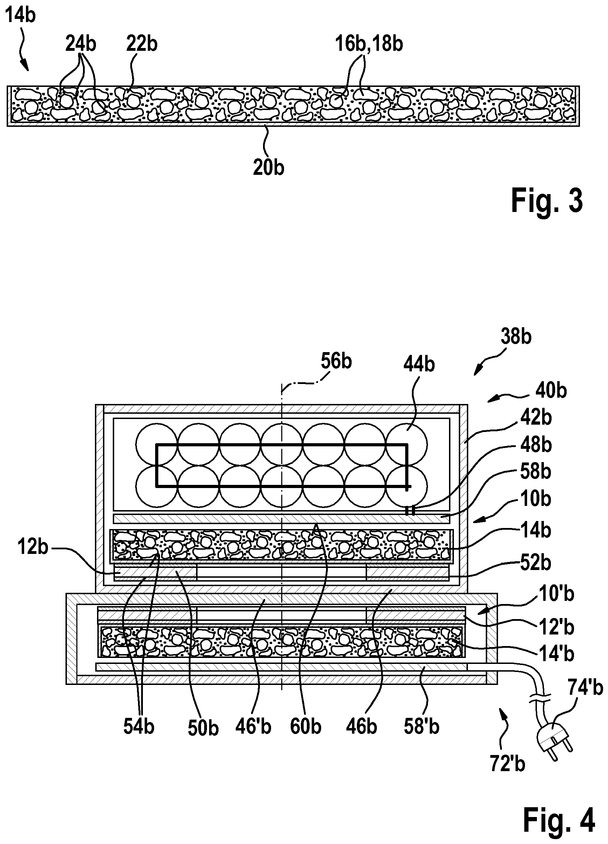

Figur 3 zeigt eine Kerneinheit 14b einer Induktivladespulenvorrichtung 10b (Figur 4) in einem zweiten Ausführungsbeispiel. Die Kerneinheit 14b weist eine Vielzahl von Kernelementen 16b auf, die von Sinterbruchstücken 18b gebildet werden. Weiter weist die Kerneinheit 14b ein Bindemittel 22b und eine Wanne 20b auf. Die Kernelemente 16b sind Bruchstücke eines von einem gesinterten Ferritmaterial gebildeten Magnetwerkstoffs. Im vorliegenden Beispiel sind die Sinterbruchstücke 18b von einem Ferritmaterial gebildet, das MnZn- und NiZn-Verbindungen enthält und eine Permeabilität µ > 500 aufweist.

Die Kernelemente 16b sind in der Wanne 20b, die zur Aufnahme der Kernelemente 16b vorgesehen ist, aufgeschichtet und mit dem von einem Epoxidharz gebildeten Bindemittel 22b vergossen. Das Bindemittel 22b enthält zusätzlich einen Anteil pulverförmiger Kernelemente 24b. In einer alternativen Ausgestaltung ist es möglich, dass das Bindemittel 22b die Kernelemente 16b lediglich mit einem dünnen Lackfilm überzieht und miteinander verklebt. Zwischenräume zwischen den Kernelementen 16b sind in diesem Fall nicht vollständig mit Bindemittel 22b gefüllt, so dass in der Kerneinheit 14b Lufteinschlüsse verbleiben.

Zu einer Herstellung der Kerneinheit 14b werden in einem ersten Schritt die Kernelemente 16b in der Wanne 20b verteilt. In einem zweiten Schritt wird das Bindemittel 22b zugefügt, das in einem dritten Schritt aushärtet. Anschließend kann die Kerneinheit 14b in die Induktivladespulenvorrichtung 10b eingebaut werden. Alternativ kann nach dem Aushärten des Bindemittels 22b die Wanne 20b entfernt und zur Herstellung weiterer Kerneinheiten 14b verwendet werden.

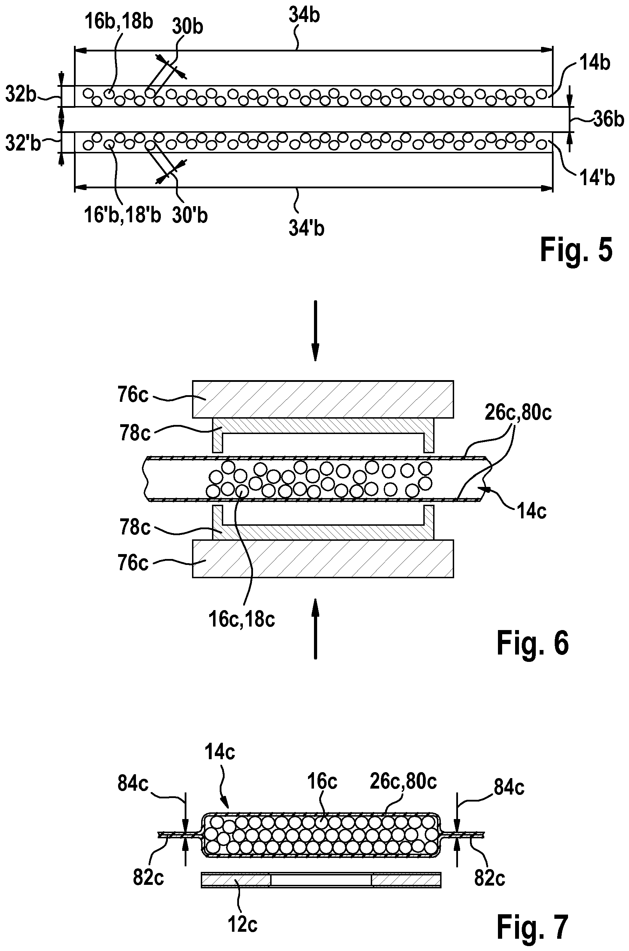

Die Kerneinheit 14b weist eine im Wesentlichen plattenförmige Gestalt auf. Die Kernelemente 16b weisen einen mittleren Durchmesser 30b auf, der kleiner ist als 2/3 einer Kernhöhe 32b (Figur 5). So kann sichergestellt werden, dass sich die Kernelemente 16b in der Kerneinheit 14b gleichmäßig verteilen und ein Herausragen von Kernelementen 16b aus der Kerneinheit 14b kann vermieden werden.

Die Induktivladespulenvorrichtung 10b ist Teil einer Handwerkzeugvorrichtung 38b (Figur 4), die als Handwerkzeugakkupack 40b ausgebildet ist. In einer Gehäuseeinheit 42b ist eine Zelleneinheit 44b angeordnet, die dazu vorgesehen ist, eine Handwerkzeugmaschine, in die der Handwerkzeugakkupack 40b eingesetzt werden kann, mit Energie zu versorgen. Der Handwerkzeugakkupack 40b verfügt zur Energieübertragung an die Handwerkzeugmaschine über eine hier nicht näher dargestellte Handwerkzeugakkupackschnittstelle. Die Induktivladespulenvorrichtung 10b ist zu einer drahtlosen induktiven Energieübertragung für einen Ladevorgang der Zelleneinheit 44b vorgesehen. Die Induktivladespulenvorrichtung 10b ist zwischen der Zelleneinheit 44b und einer Gehäusewand 46b der Gehäuseeinheit 42b angeordnet. Ausgehend von der Gehäusewand 46b in Richtung der Zelleneinheit 44b folgen zunächst eine Spuleneinheit 12b, die Kerneinheit 14b und eine Elektronikeinheit 58b. Die Elektronikeinheit 58b ist mittels eines Verbindungsleiters 48b mit der Zelleneinheit 44b verbunden und weist eine Ladeelektronik für die Zelleneinheit 44b auf. Eine hier nicht näher dargestellte Kontaktierungseinheit verbindet die Spuleneinheit 12b mit der Elektronikeinheit 58b.

Die Spuleneinheit 12b wird von einer Leiterplatte 52b gebildet. Die Spuleneinheit 12b weist beidseitig einer Trägerschicht 50b der Leiterplatte 52b je eine Leiterschleife 54b mit einer Mehrzahl Wicklungen um eine Wicklungsachse 56b auf. Die Wicklungen der Leiterschleifen 54b weisen denselben Wicklungssinn auf. Die Wicklungen werden von den Leiterbahnen zweier auf der Trägerschicht 50b angeordneten Leiterschichten der Leiterplatte 52b gebildet. Nicht näher dargestellte Durchführungen durch die Trägerschicht 50b weisen einen Verbindungsleiter auf, der die der Wicklungsachse 56b nächsten Enden der Wicklungen elektrisch verbindet, so dass die beiden Leiterschleifen 54b eine elektrische Spule bilden. Die der Wicklungsachse 56b fernen Enden der Wicklungen sind mit der Elektronikeinheit 58b verbunden.

An der der Kerneinheit 14b zugewandten Seite der Elektronikeinheit 58b ist eine von einer Leiterschicht 60b gebildete Abschirmeinheit angeordnet, die die Elektronikeinheit 58b und die Zelleneinheit 44b in Richtung der Wicklungsachse 56b gesehen vollständig überdeckt. Ein magnetisches Wechselfeld in dem Bereich der Spuleneinheit 12b wird von der Leiterschicht 60b zu einem Großteil in Richtung der Spuleneinheit 12b zurückgeworfen, so dass eine Feldstärke im Bereich der Zelleneinheit 44b und der ausgehend von der Leiterschicht 60b der Zelleneinheit 44b zugewandten Seite der Elektronikeinheit 58b reduziert ist.

Wird die Induktivladespulenvorrichtung 10b dem Einfluss eines elektromagnetischen Wechselfelds ausgesetzt, wird in den Leiterschleifen 54b der Spuleneinheit 12b ein Strom induziert, der zum Laden der Zelleneinheit 44b genutzt werden kann. Zur Erzeugung des elektromagnetischen Wechselfelds ist eine zweite, analog aufgebaute Induktivladespulenvorrichtung 10'b vorgesehen, die in einer Handwerkzeugakkuladevorrichtung 72'b angeordnet ist. Die Induktivladespulenvorrichtung 10'b weist eine Elektronikeinheit 58'b auf, die aus einem über eine Stromversorgung 74'b zugeführten Strom einen Wechselstrom mit einer Frequenz von 100 kHz erzeugt und einer Spuleneinheit 12'b zuführt, so dass das elektromagnetische Wechselfeld erzeugt wird. Wird der Handwerkzeugakkupack 40b mit der Gehäusewand 46b auf die Handwerkzeugakkuladevorrichtung 72'b aufgesetzt, so gerät die Induktivladespulenvorrichtung 10b in den Einfluss des magnetischen Wechselfelds der Induktivladespulenvorrichtung 10'b, so dass eine Energieübertragung stattfindet. Eine Kerneinheit 14'b ist dazu vorgesehen, das von der Spuleneinheit 12'b erzeugte elektromagnetische Wechselfeld in Richtung der Spuleneinheit 12b des Handwerkzeugakkupacks 40b zu bündeln.

Figur 5 zeigt die Festlegung einer minimalen Größe der Kernelemente 16b. Wird der Handwerkzeugakkupack 40b auf die Handwerkzeugakkuladevorrichtung 72'b aufgesetzt, bilden diese ein System mit den zwei Induktivladespulenvorrichtungen 10b und 10'b. Die in Figur 5 dargestellten beiden Kerneinheiten 14b, 14'b weisen jeweils einen Durchmesser 30b, 30'b und die Kernhöhe 32b, 32'b auf, die im gezeigten Beispiel identisch sind. Zwischen den beiden Kerneinheiten 14b und 14'b besteht ein durch den mechanischen Aufbau des Handwerkzeugakkupacks 40b und der Handwerkzeugakkuladevorrichtung 72'b definierter Luftspalt 36b. Der Luftspalt 36b ist als Abstand zwischen den beiden Kerneinheiten 14b und 14'b zu verstehen, in dem weitere Bauteile angeordnet sind, insbesondere die Spuleneinheiten 12b und 12'b sowie die Gehäusewand 46b und eine Gehäusewand 46'b der Handwerkzeugakkuladevorrichtung 72'b.

Die Kernelemente 16b weisen den mittleren Durchmesser 30b auf, der zumindest 10µm multipliziert mit einem Verhältnis aus einem Kerndurchmesser 34b der Kerneinheit 14b geteilt durch den Luftspalt 36b im betriebsbereiten Zustand der Induktivladespulenvorrichtungen 10b, 10'b beträgt. Ein kleinster mittlerer Durchmesser 30'b der Kernelemente 16'b ist analog abhängig von einem Kerndurchmesser 34'b und dem Luftspalt 36b festgelegt.

Figuren 6 und 7 zeigen ein Herstellungsverfahren einer Kerneinheit 14c (Figur 7) zum Betrieb mit einer Spuleneinheit 12c in einem dritten Ausführungsbeispiel. Die Kerneinheit 14c des dritten Ausführungsbeispiels unterscheidet sich von der Kerneinheit 14b des zweiten Ausführungsbeispiels insbesondere dadurch, dass die Kerneinheit 14c einen Kernmantel 26c aufweist, der zu einer Fixierung von Kernelementen 16c vorgesehen ist. Zwischen zwei Lagen Elastomermaterial 80c sind die von Sinterbruchstücken 18c gebildeten Kernelemente 16c angeordnet. Zwei von Heizplatten 76c beheizte Formen 78c werden beidseitig gegen die Lagen von Elastomermaterial 80c gefahren, so dass ein Vulkanisierungsprozess einsetzt und die Kerneinheit 14c gebildet wird. Bei der Kerneinheit 14c sind die Kernelemente 16c in einer Hülle aus Elastomermaterial 80c eingepackt. Überstehende Enden 82c des Elastomermaterials 80c können in einem weiteren Schritt an Schnittpositionen 84c abgetrennt werden. Die so gebildete Kerneinheit 14c weist eine hohe Flexibilität auf, da die Kernelemente 16c in der Kerneinheit 14c lose angeordnet sind.

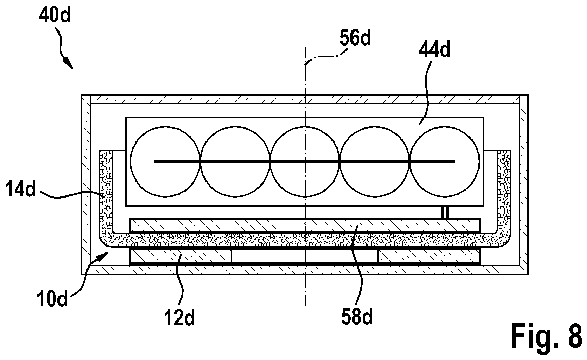

Figur 8 zeigt einen Handwerkzeugakkupack 40d mit einer Induktivladespulenvorrichtung 10d mit einer Kerneinheit 14d in einem vierten Ausführungsbeispiel. Die Kerneinheit 14d des dritten Ausführungsbeispiels unterscheidet sich von der Kerneinheit 14b des zweiten Ausführungsbeispiels insbesondere dadurch, dass die Kerneinheit 14d eine wannenförmige Gestalt aufweist. Insbesondere umgibt die Kerneinheit 14d eine Elektronikeinheit 58d um eine Wicklungsachse 56d vollständig und eine Zelleneinheit 44d um die Wicklungsachse 56d teilweise. Die Kerneinheit 14d bildet eine Abschirmeinheit der Elektronikeinheit 58d und der Zelleneinheit 44d. Ein aus Richtung einer Spuleneinheit 12d auf die Kerneinheit 14d auftreffendes magnetisches Wechselfeld wird von der Kerneinheit 14d gebündelt und im Bereich der Spuleneinheit 12d konzentriert. Auf einer der Spuleneinheit 12d abgewandten Seite der Kerneinheit 14d ist eine magnetische Feldstärke gering, so dass Einflüsse des magnetischen Wechselfelds auf die Elektronikeinheit 58d und die Zelleneinheit 44d reduziert sind.

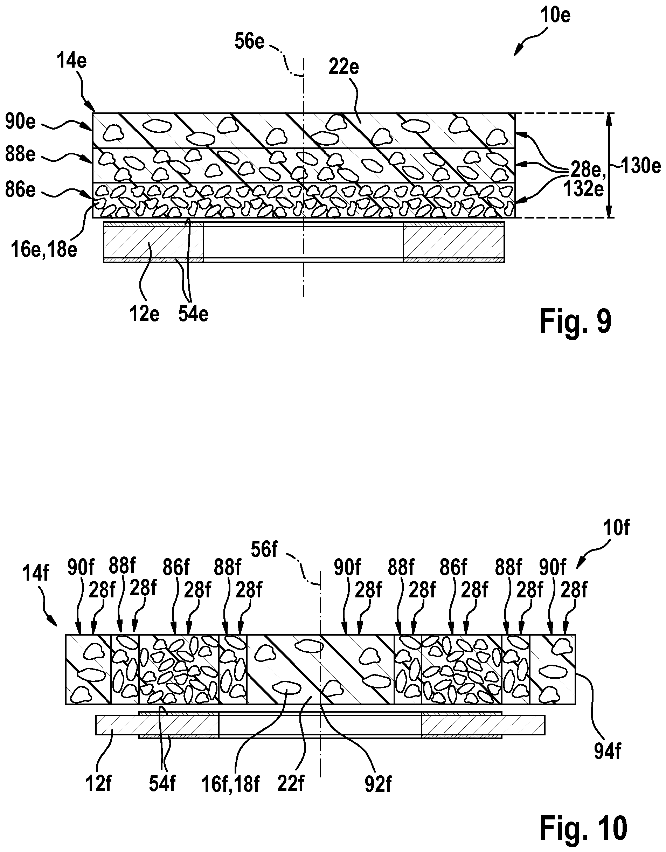

Figur 9 zeigt eine Kerneinheit 14e und eine Spuleneinheit 12e einer Induktivladespulenvorrichtung 10e in einem fünften Ausführungsbeispiel. Die Kerneinheit 14e des fünften Ausführungsbeispiels unterscheidet sich vom zweiten Ausführungsbeispiel insbesondere dadurch, dass die Kerneinheit 14e Bereiche 28e mit einer differierenden Dichte von Kernelementen 16e aufweist. Die Kernelemente 16e werden von Sinterbruchstücken 18e gebildet. Die Bereiche 28e bilden Schichten 132e, die in einer Dickenrichtung 130e, die in einer Richtung einer Wicklungsachse 56e von Leiterschleifen 54e der Spuleneinheit 12e orientiert ist, nebeneinander angeordnet sind. Ein Bereich hoher Dichte 86e von Kernelementen 16e ist der Spuleneinheit 12e zugewandt. In diesem Bereich hoher Dichte 86e ist bei einem Betrieb der Induktivladespulenvorrichtung 10e eine Feldstärke eines magnetischen Wechselfelds am größten. Auf einer der Spuleneinheit 12e abgewandten Seite der Kerneinheit 14e befindet sich ein Bereich niedriger Dichte 90e von Kernelementen16e. In diesem Bereich niedriger Dichte 90e ist bei einem Betrieb der Induktivladespulenvorrichtung 10e eine Feldstärke eines magnetischen Wechselfelds am kleinsten. Zwischen den Bereichen hoher Dichte 86e und niedriger Dichte 90e liegt ein Bereich mittlerer Dichte 88e von Kernelementen 16e. Der Bereich hoher Dichte 86e weist eine gemittelte Permeabilitätszahl µ = 200 auf, der Bereich mittlerer Dichte 88e eine gemittelte Permeabilitätszahl µ = 50 und der Bereich niedriger Dichte 90e eine Permeabilitätszahl µ = 20. Ein Anteil eines Bindemittels 22e, welches die Kernelemente 16e verbindet, verhält sich umgekehrt proportional zur Dichte der Kernelemente 16e. Die zur Herstellung der Kerneinheit 14e benötigte Menge an Kernelementen 16e ist vorteilhaft reduziert.

Figur 10 zeigt eine Kerneinheit 14f und eine Spuleneinheit 12f einer Induktivladespulenvorrichtung 10f in einem sechsten Ausführungsbeispiel. Die Kerneinheit 14f des sechsten Ausführungsbeispiels unterscheidet sich vom ersten Ausführungsbeispiel insbesondere dadurch, dass die Kerneinheit 14f Bereiche 28f mit einer differierenden Dichte von Kernelementen 16f aufweist. Die Kernelemente 16f sind von Sinterbruchstücken 18f gebildet und in einem Bindemittel 22f eingebettet. Die Bereiche 28f sind radial um eine Wicklungsachse 56f angeordnet. Ein Bereich hoher Dichte 86f an Kernelementen 16f ist in Richtung der Wicklungsachse 56f angrenzend an Leiterschleifen 54f der Spuleneinheit 12f angeordnet. In diesem Bereich hoher Dichte 86f ist bei einem Betrieb der Induktivladespulenvorrichtung 10f eine Feldstärke eines magnetischen Wechselfelds am größten. In einem Bereich 28f um ein Zentrum 92f der Kerneinheit 14f und in einem an einen Rand 94f der Kerneinheit 14f angrenzenden Bereich befinden sich Bereiche niedriger Dichte 90f von Kernelementen 16f. Diese Bereiche niedriger Dichte 90f weisen eine große Entfernung zu den Leiterschleifen 54f auf. In diesen Bereichen niedriger Dichte 90f ist bei einem Betrieb der Induktivladespulenvorrichtung 10f eine Feldstärke eines magnetischen Wechselfelds am kleinsten. Zwischen den Bereichen hoher Dichte 86f und niedriger Dichte 90f liegen Bereiche mittlerer Dichte 88f von Kernelementen 16f. In einer weiteren Ausgestaltung der Erfindung ist es möglich, dass eine Verteilung von Bereichen 28f unterschiedlicher Dichte von Kernelementen des fünften und sechsten Ausführungsbeispiels kombiniert sind, das heißt, dass eine Dichte von Kernelementen 16f sowohl axial als auch radial von einem Abstand zur Leiterschleife 54f der Spuleneinheit 12f abhängig ist.

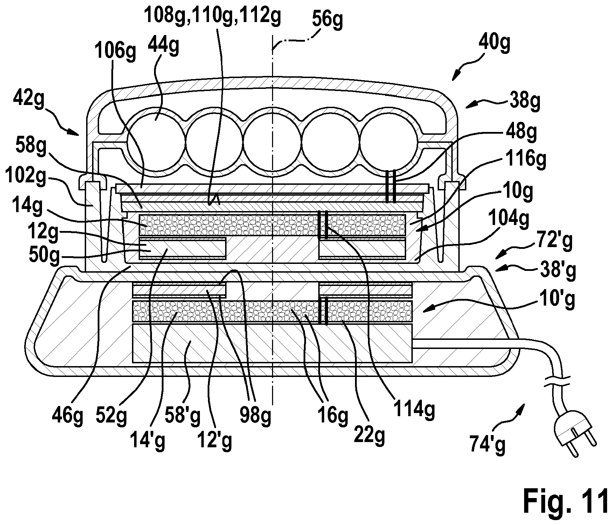

Figur 11 zeigt eine Handwerkzeugvorrichtung 38g mit einer Induktivladespulenvorrichtung 10g und eine weitere Handwerkzeugvorrichtung 38g' mit einer Induktivladespulenvorrichtung 10'g in einem siebten Ausführungsbeispiel. Die Handwerkzeugvorrichtung 38g ist als Handwerkzeugakkupack 40g ausgebildet, die Handwerkzeugvorrichtung 38g' als Handwerkzeugakkuladevorrichtung 72'g. In einer Gehäuseeinheit 42g des Handwerkzeugakkupacks 40g ist eine Zelleneinheit 44g angeordnet, die dazu vorgesehen ist, eine Handwerkzeugmaschine mit Energie zu versorgen. Der Handwerkzeugakkupack 40g verfügt über eine nicht näher dargestellte Handwerkzeugakkupackschnittstelle zur Kontaktierung mit der Handwerkzeugmaschine. Die Induktivladespulenvorrichtung 10g ist zu einer drahtlosen Energieübertragung für einen Ladevorgang der Zelleneinheit 44g vorgesehen. Die Induktivladespulenvorrichtung 10g ist zwischen der Zelleneinheit 44g und einer Gehäusewand 46g eines Bodenteils 102g der Gehäuseeinheit 42g angeordnet. Ausgehend von der Gehäusewand 46g in Richtung Zelleneinheit 44g folgen zunächst eine Spuleneinheit 12g, eine Kerneinheit 14g und eine Elektronikeinheit 58g. Die Elektronikeinheit 58g weist eine Ladeelektronik auf, die dazu vorgesehen ist, die Zelleneinheit 44g aufzuladen.

Die Spuleneinheit 12g wird von einer scheibenförmigen Leiterplatte 52g gebildet. Die Leiterplatte 52g weist beidseitig einer Trägerschicht 50g der Leiterplatte 52g jeweils eine Leiterschleife mit Wicklungen 98g mit einem gemeinsamen Wicklungssinn um eine Wicklungsachse 56g auf. Die Wicklungen 98g werden von Leiterbahnen der Leiterplatte 52g gebildet. Ein hier nicht näher dargestellter Verbindungsleiter verbindet die Wicklungen 98g der beiden Leiterschleifen. Die Wicklungen 98g bilden somit elektrisch eine Spule der Spuleneinheit 12g. Die überwiegend von mit einem Bindemittel 22g verklebten, von einem gesinterten Ferritmaterial gebildeten Kernelementen 16g gebildete Kerneinheit 14g ist ebenfalls scheibenförmig und weist denselben Durchmesser wie die Spuleneinheit 12g auf. Ein durch die Kerneinheit 14g geführter Verbindungsleiter 114g verbindet die Spuleneinheit 12g mit der Elektronikeinheit 58g. Die Elektronikeinheit 58g ist mittels eines Verbindungsleiters 48g mit der Zelleneinheit 44g verbunden.

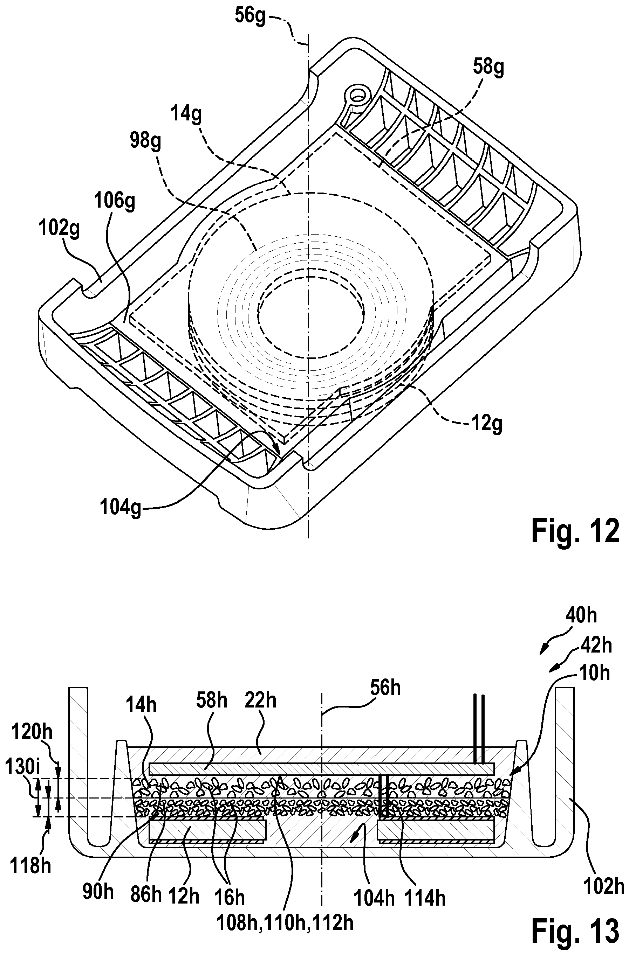

Das Bodenteil 102g der Gehäuseeinheit 42g weist einen wannenförmigen Aufnahmebereich 104g auf, der zu einer Aufnahme der Kerneinheit 14g, der Spuleneinheit 12g und der Elektronikeinheit 58g vorgesehen ist. Die Spuleneinheit 12g, die Kerneinheit 14g und die Elektronikeinheit 58g werden in den Aufnahmebereich 104g eingelegt und anschließend mit einer Vergussmasse 116g vergossen. Alternativ ist es möglich, dass die Induktivladespulenvorrichtung 10g in einem Mehrkomponenten-Spritzgussverfahren gebildet wird, bei dem die Spuleneinheit 12g, die Kerneinheit 14g und die Elektronikeinheit 58g in den Aufnahmebereich 104g eingelegt und anschließend mit einem Thermoplast umspritzt werden. Der Verbindungsleiter 48g bleibt aus der Induktivladespulenvorrichtung 10g geführt, so dass er anschließend an die Zelleneinheit 44g angeschlossen werden kann. Ein von einer Kunststoffplatte gebildetes Abdeckelement 106g (Figur 12) deckt die Induktivladespulenvorrichtung 10g im Aufnahmebereich 104g gegenüber der Zelleneinheit 44g ab.

Das Abdeckelement 106g weist eine elektrisch leitende Materialschicht 110g auf, die von einer Graphitlackierung gebildet wird. Die Materialschicht 110g bildet eine Abschirmeinheit 108g, die zwischen der Spuleneinheit 12g und der Zelleneinheit 44g angeordnet ist. Die Materialschicht 110g weist bei einer Projektion in Richtung der Wicklungsachse 56g eine Projektionsfläche 112g auf, die die Zelleneinheit 44g vollständig überdeckt. Die Abschirmeinheit 108g schirmt die Zelleneinheit 44g vor Einflüssen eines bei Betrieb der Induktivladespulenvorrichtung 10g auftretenden elektromagnetischen Wechselfelds ab.

Wird die Induktivladespulenvorrichtung 10g dem Einfluss eines elektromagnetischen Wechselfelds ausgesetzt, wird in den Wicklungen 98g der Spuleneinheit 12g ein Strom induziert, der zum Laden der Zelleneinheit 44g genutzt werden kann. Zur Erzeugung des elektromagnetischen Wechselfelds ist die zweite, analog aufgebaute Induktivladespulenvorrichtung 10'g vorgesehen, die in der Handwerkzeugakkuladevorrichtung 72'g angeordnet ist. Die Induktivladespulenvorrichtung 10'g weist eine Elektronikeinheit 58'g auf, die aus einem über eine Stromversorgung 74'g zugeführten Strom einen Wechselstrom mit einer Frequenz von 100 kHz erzeugt und einer Spuleneinheit 12'g zuführt, so dass das elektromagnetische Wechselfeld erzeugt und von einer Kerneinheit 14'g gebündelt wird. Wird der Handwerkzeugakkupack 40g auf die Handwerkzeugakkuladevorrichtung 72'g aufgesetzt, so gerät die Induktivladespulenvorrichtung 10g in den Einfluss des elektromagnetischen Wechselfelds der Induktivladespulenvorrichtung 10'g, so dass eine Energieübertragung stattfindet.

Figur 13 zeigt einen Bodenteil 102h einer Gehäuseeinheit 42h eines Handwerkzeugakkupacks 40h mit einer Induktivladespulenvorrichtung 10h in einem achten Ausführungsbeispiel. Die Induktivladespulenvorrichtung 10h des achten Ausführungsbeispiels unterscheidet sich von der Induktivladespulenvorrichtung 10g des siebten Ausführungsbeispiels insbesondere dadurch, dass eine Spuleneinheit 12h und eine Elektronikeinheit 58h in eine Kerneinheit 14h eingebettet sind. Die Kerneinheit 14h wird von in einem Bindemittel 22h eingebetteten Kernelementen 16h gebildet. Das Bindemittel 22h ist von einem Epoxidharz gebildet. Die Kernelemente 16h sind von Bruchstücken eines gesinterten Ferritmaterials gebildet. Die Kernmaterialzusammensetzung aus Bindemittel 22h und Kernelementen 16h differiert in Bereichen 86h, 90h der Kerneinheit 14h.

Bei einer Herstellung der Induktivladespulenvorrichtung 10h wird in einen Aufnahmebereich 104h des Bodenteils 102h zunächst die Spuleneinheit 12h eingebracht. In einem nächsten Schritt wird auf die Spuleneinheit 12h eine Schicht 118h, die Kernelemente 16h in einer hohen Dichte aufweist, aufgebracht. Diese Schicht 118h bildet einen Bereich 86h der Kerneinheit 14h und weist eine Permeabilitätszahl von µ = 200 auf. Die Schichten 118h, 120h sind in einer Dickenrichtung 130h der Kerneinheit 14h, die in Richtung einer Wicklungsachse 56h orientiert ist, nebeneinander angeordnet. Die Spuleneinheit 12h und die Kernelemente 22h werden mit dem Bindemittel 22h vergossen. Es wird eine weitere Schicht 120h aufgebracht, die einen weiteren Bereich 90h der Kerneinheit 14h bildet und Kernelemente 22h in einer niedrigen Dichte aufweist, die ebenfalls mit dem Bindemittel 22h vergossen sind. Diese Schicht 120h weist eine Permeabilitätszahl von µ = 50 auf. Anschließend wird die Elektronikeinheit 58h mit einem durch die Schichten 118h, 120h geführten Verbindungsleiter 114h mit der Spuleneinheit 12h verbunden und ebenfalls mit dem Bindemittel 22h vergossen. Die Induktivladespulenvorrichtung 10h bildet eine kompakte Einheit, die eine vom Bindemittel 22h und den Kernelementen 16h gebildete Kerneinheit 14h aufweist, in die die Elektronikeinheit 58h und die Spuleneinheit 12h eingebettet sind. Auf der der Spuleneinheit 12h zugewandten Seite der Elektronikeinheit 58h ist eine von einer Kupferschicht gebildete Materialschicht 110h angeordnet, die eine Abschirmeinheit 108h bildet. Die Materialschicht 110h weist in Richtung der Wicklungsachse 56h eine Projektionsfläche 112h auf, die die Elektronikeinheit 58h vollständig überdeckt. Die Elektronikeinheit 58h ist durch die Abschirmeinheit 108h vor Einflüssen eines elektromagnetischen Wechselfelds aus dem Bereich der Spuleneinheit 12h geschützt.

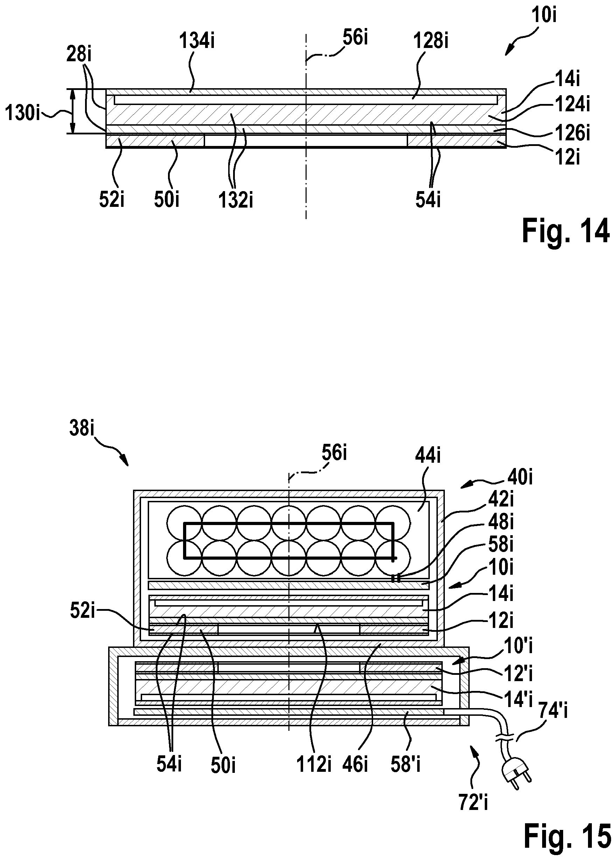

Figur 14 zeigt eine Kerneinheit 14i und eine Spuleneinheit 12i einer Induktivladespulenvorrichtung 10i, die in Figur 15 detailliert dargestellt ist, in einem neunten Ausführungsbeispiel. Die Kerneinheit 14i weist Bereiche 28i mit einer differierenden Kernmaterialzusammensetzung auf. Ein erstes Kernmaterial 124i weist eine mittlere Permeabilität µ = 50 auf. Ein zweites Kernmaterial 126i ist auf einer der Spuleneinheit 12i zugewandten Seite der Kerneinheit 14i in einem Beschichtungsverfahren auf das erste Kernmaterial 124i aufgebracht und weist eine mittlere Permeabilität µ = 200 auf. Die von den Kernmaterialien 124i, 126i gebildeten Bereiche 28i sind untereinander stoffschlüssig verbunden. Die Bereiche 28i bilden Schichten 132i, die in einer Dickenrichtung 130i, die in Richtung einer Wicklungsachse 56i der Spuleneinheit 12i orientiert ist, nebeneinander angeordnet sind. Auf einer der Spuleneinheit 12i abgewandten Seite der Kerneinheit 14i weist diese einen weiteren Bereich 28i auf, der von Luft 128i gebildet ist. Eine Abdeckschicht 134i, die vom ersten Kernmaterial 124i gebildet ist, deckt den von Luft 128i gebildeten Bereich 28i ab. Der von Luft 128i gebildete Bereich 28i weist gemeinsam mit der Abdeckschicht 134i eine mittlere Permeabilität µ = 20 auf. Ausgehend von der der Spuleneinheit 12i zugewandten Seite nimmt die Permeabilität µ der Kerneinheit von µ = 200 bis µ = 20 ab.

Die Induktivladespulenvorrichtung 10i ist Teil einer Handwerkzeugvorrichtung 38i (Figur 15), die als Handwerkzeugakkupack 40i ausgebildet ist. In einer Gehäuseeinheit 42i ist eine Zelleneinheit 44i angeordnet, die dazu vorgesehen ist, eine Handwerkzeugmaschine, in die der Handwerkzeugakkupack 40i eingesetzt werden kann, mit Energie zu versorgen. Der Handwerkzeugakkupack 40i verfügt zur Energieübertragung an die Handwerkzeugmaschine über eine hier nicht näher dargestellte Handwerkzeugakkupackschnittstelle. Die Induktivladespulenvorrichtung 10i ist zu einer drahtlosen induktiven Energieübertragung für einen Ladevorgang der Zelleneinheit 44i vorgesehen. Die Induktivladespulenvorrichtung 10i ist zwischen der Zelleneinheit 44i und einer Gehäusewand 46i der Gehäuseeinheit 42i angeordnet. Ausgehend von der Gehäusewand 46i in Richtung der Zelleneinheit 44i folgen zunächst die Spuleneinheit 12i, die Kerneinheit 14i und eine Elektronikeinheit 58i. Die Elektronikeinheit 58i ist mit einem Verbindungsleiter 48i mit der Zelleneinheit 44i verbunden und weist eine Ladeelektronik für die Zelleneinheit 44i auf. Eine hier nicht näher dargestellte Kontaktierungseinheit verbindet die Spuleneinheit 12i mit der Elektronikeinheit 58i.

Die Spuleneinheit 12i wird von einer Leiterplatte 52i gebildet. Die Leiterplatte 52i weist beidseitig einer Trägerschicht 50i je eine Leiterschleife 54i mit einer Mehrzahl Wicklungen um die Wicklungsachse 56i auf. Die Wicklungen der Leiterschleifen 54i weisen denselben Wicklungssinn auf. Die Wicklungen werden von den Leiterbahnen zweier auf der Trägerschicht 50i angeordneter Leiterschichten der Leiterplatte 52i gebildet. Nicht näher dargestellte Durchführungen durch die Trägerschicht 50i weisen einen Verbindungsleiter auf, der die der Wicklungsachse 56i nächsten Enden der Wicklungen elektrisch verbindet, so dass die beiden Leiterschleifen 54i elektrisch eine Spule bilden. Die der Wicklungsachse 56i fernen Enden der Wicklungen sind mit der Elektronikeinheit 58i verbunden.

Die Kerneinheit 14i weist bei einer Projektion in Richtung der Wicklungsachse 56i eine Projektionsfläche 112i auf, die die Elektronikeinheit 58i und die Zelleneinheit 44i vollständig überdeckt. Ein in einem Betrieb der Induktivladespulenvorrichtung 10i auftretendes magnetisches Wechselfeld in dem Bereich der Spuleneinheit 12i wird von der Kerneinheit 14i in Richtung der Spuleneinheit 12i gebündelt. Auf einer der Elektronikeinheit 58i und der Zelleneinheit 44i zugewandten Seite der Kerneinheit 14i bleibt eine magnetische Feldstärke gering, so dass die Feldstärke im Bereich der Zelleneinheit 44i und der Elektronikeinheit 58i gegenüber der Feldstärke im Bereich der Spuleneinheit 12i stark reduziert ist. Die Kerneinheit 14i bildet somit eine Abschirmeinheit für die Elektronikeinheit 58i und die Zelleneinheit 44i. Auf eine weitere Abschirmeinheit kann verzichtet werden.

Wird die Induktivladespulenvorrichtung 10i dem Einfluss eines magnetischen Wechselfelds ausgesetzt, wird in den Leiterschleifen 54i der Spuleneinheit 12i ein Strom induziert, der zum Laden der Zelleneinheit 44i genutzt werden kann. Zur Erzeugung des magnetischen Wechselfelds ist eine zweite, analog aufgebaute Induktivladespulenvorrichtung 10'i vorgesehen, die in der als Handwerkzeugakkuladevorrichtung 72'i ausgebildeten Handwerkzeugvorrichtung 38i angeordnet ist. Die Induktivladespulenvorrichtung 10'i weist eine Elektronikeinheit 58'i auf, die aus einem über eine Stromversorgung 74'i zugeführten Strom einen Wechselstrom mit einer Frequenz von 100 kHz erzeugt und einer Spuleneinheit 12'i zuführt, so dass das magnetische Wechselfeld erzeugt wird. Wird der Handwerkzeugakkupack 40i mit der Gehäusewand 46i auf die Handwerkzeugakkuladevorrichtung 72'i aufgesetzt, so gerät die Induktivladespulenvorrichtung 10i in den Einfluss des magnetischen Wechselfelds der Induktivladespulenvorrichtung 10'i, so dass eine Energieübertragung stattfindet. Eine Kerneinheit 14'i ist dazu vorgesehen, das von der Spuleneinheit 12'i erzeugte magnetische Wechselfeld in Richtung der Spuleneinheit 12i des Handwerkzeugakkupacks 40i zu bündeln.

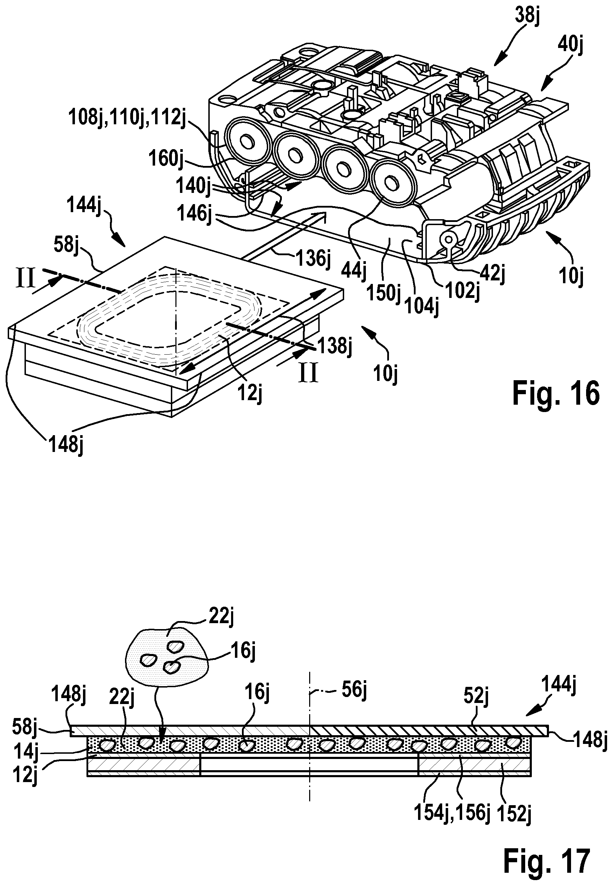

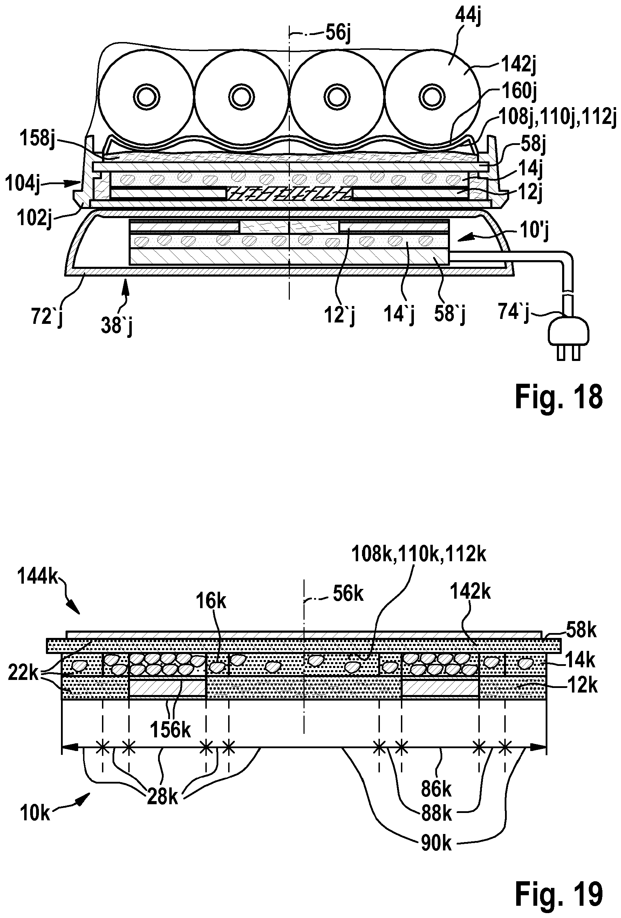

Figur 16 zeigt eine als Handwerkzeugakkupack 40j ausgebildete Handwerkzeugvorrichtung 38j mit einer Induktivladespulenvorrichtung 10j. Die Induktivladespulenvorrichtung 10j weist eine Spuleneinheit 12j, eine Kerneinheit 14j und eine Elektronikeinheit 58j auf, die als ein Spulenmodul 144j ausgebildet sind. Figur 17 zeigt eine Schnittdarstellung entlang einer Schnittebene II des in Figur 16 dargestellten Spulenmoduls 144j. Ein Teil des Handwerkzeugakkupacks 40j bildet eine Gehäuseeinheit 42j der Induktivladespulenvorrichtung 10j mit einem in einem Bodenteil 102j angeordneten taschenartigen Aufnahmebereich 104j für das die Spuleneinheit 12j, die Kerneinheit 14j und die Elektronikeinheit 58j aufweisende Spulenmodul 144j. Die Spuleneinheit 12j des Spulenmoduls 144j wird von einer Leiterplatte 152j gebildet, die beidseitig Leiterschichten 154j aufweist, die Leiterbahnen bilden. Die Leiterbahnen bilden beidseitig Wicklungen aufweisende Leiterschleifen 156j der Spuleneinheit 12j mit gemeinsamem Wicklungssinn um eine Wicklungsachse 56j. Die beiden Leiterschleifen 156j sind mit einem nicht näher dargestellten Verbindungsleiter verbunden, so dass die beiden Leiterschleifen 156j elektrisch eine Spule bilden. Die Kerneinheit 14j wird von mit einem Bindemittel 22j verbundenen Kernelementen 16j gebildet und überdeckt die Spuleneinheit 12j. Die Kernelemente 16j bestehen überwiegend aus einem Ferritmaterial. Angrenzend an die Kerneinheit 14j ist die Elektronikeinheit 58j angeordnet, wobei Kanten 148j der Elektronikeinheit 58j über die Spuleneinheit 12j und die Kerneinheit 14j überstehen. Die Spuleneinheit 12j und die Elektronikeinheit 58j sind mit einem nicht näher dargestellten, durch die Kerneinheit 14j geführten Verbindungsleiter verbunden. Der Aufnahmebereich 104j ist dazu vorgesehen, das Spulenmodul 144j in einer Einschubrichtung 136j, die parallel zu einer Hauptflächenerstreckung 138j der Spuleneinheit 12j, der Kerneinheit 14j und der Elektronikeinheit 58j ausgerichtet ist, aufzunehmen. Im Aufnahmebereich 104j sind zwei parallel zur Einschubrichtung 136j angeordnete Führungsschienen 146j so angeordnet, dass zwei Kanten 148j der Elektronikeinheit 58j in die Führungsschienen 146j in Einschubrichtung 136j eingeschoben werden können. Die Kanten 148j werden von einer Leiterplatte 52j der eine Ladeelektronik aufweisenden Elektronikeinheit 58j gebildet. Die Kanten 148j sind an bezogen auf eine Richtung parallel zur Hauptflächenerstreckung 138j und senkrecht zur Einschubrichtung 136j gegenüberliegenden Seiten des Aufnahmebereichs 104j angeordnet. Hauptflächen 140j des Aufnahmebereichs 104j sind geschlossen ausgebildet. Eine Montageöffnung 150j, durch die das Spulenmodul 144j in Einschubrichtung 136j eingeschoben wird, wird nach Montage der Induktivladespulenvorrichtung 10j durch eine nicht näher dargestellte Abdeckung verschlossen. Auf einer dem das Spulenmodul 144j aufweisenden Bodenteil 102j gegenüberliegenden Seite des Handwerkzeugakkupacks 40j ist eine Zelleneinheit 44j des Handwerkzeugakkupacks 40j angeordnet. Der Handwerkzeugakkupack 40j wird nach Montage des Spulenmoduls 144j mittels eines nicht näher dargestellten Verbindungsleiters mit der Ladeelektronik der Elektronikeinheit 58j verbunden. Das Spulenmodul 144j wird nach der Montage zur Fixierung und zum Schutz vor Umwelteinflüssen mit einem Epoxidharz 158j im Aufnahmebereich 104j vergossen (Figur 18).

Die Zelleneinheit 44j bildet eine zur Vermeidung von durch ein zum Betrieb der Induktivladespulenvorrichtung 10j notwendiges elektromagnetisches Wechselfeld in der Zelleneinheit 44j induzierten Verlustströmen abzuschirmende Baugruppe 142j. Zur Abschirmung ist eine Abschirmeinheit 108j vorgesehen, die von einer Materialschicht 110j gebildet wird, die bei einer Projektion in Richtung der Wicklungsachse 56j der Spuleneinheit 12j eine Projektionsfläche 112j aufweist, die die Zelleneinheit 44j im Wesentlichen überdeckt. Die Materialschicht 110j ist von einer elektrisch leitenden Lackschicht gebildet, die auf eine Trennwand 160j aufgebracht ist, die den Aufnahmebereich 104j von der Zelleneinheit 44j trennt.

Um die Zelleneinheit 44j aufzuladen, wird der Handwerkzeugakkupack 40j auf eine als Handwerkzeugakkuladevorrichtung 72'j ausgebildete Handwerkzeugvorrichtung 38'j aufgesetzt (Figur 18), die eine analog aufgebaute Induktivladespulenvorrichtung 10'j aufweist. Die Handwerkzeugakkuladevorrichtung 72'j verfügt über eine Stromversorgung 74'j. Wird die Handwerkzeugakkuladevorrichtung 72'j mit Strom versorgt, wird die Induktivladespulenvorrichtung 10'j von einem hochfrequenten Wechselstrom von 100 kHz durchflossen, der von einer auf der Elektronikeinheit 58'j angeordneten Ladeelektronik erzeugt wird. In der Spuleneinheit 12'j wird ein magnetisches Wechselfeld erzeugt, welches von der Kerneinheit 14'j gebündelt und im Wesentlichen in Richtung der Induktivladespulenvorrichtung 10j abgegeben wird. In der Spuleneinheit 12j der Induktivladespulenvorrichtung 10j wird ein Strom induziert, mit dem die Zelleneinheit 44j geladen werden kann. Figur 19 zeigt ein Spulenmodul 144k einer Spulenvorrichtung 10k in einem zweiten Ausführungsbeispiel. Das Spulenmodul 144k unterscheidet sich vom Spulenmodul 144j des ersten Ausführungsbeispiels insbesondere dadurch, dass eine Spuleneinheit 12k und eine Elektronikeinheit 58k teilweise in eine Kerneinheit 14k eingebettet sind. Die Kerneinheit 14k wird von in einem Bindemittel 22k eingebetteten Kernelementen 16k, die als Bruchstücke eines Ferritmaterials ausgebildet sind, gebildet. Eine von einem Verhältnis des Bindemittels 22k und der Kernelemente 16k gebildete Kernmaterialzusammensetzung differiert in Bereichen 28k der Kerneinheit 14k. In Richtung einer Wicklungsachse 56k angrenzend an Leiterschleifen 156k der von einer Leiterplatte gebildeten Spuleneinheit 12k weist die Kerneinheit 14k einen ersten, ringförmigen Bereich 28k auf, der von einem Bereich hoher Dichte 86k mit einer Permeabilität µ = 200 gebildet ist. An diesen Bereich hoher Dichte 86k schließen sich bezogen auf die Wicklungsachse 56k nach innen und außen ringförmige Bereiche mittlerer Dichte 88k von Kernmaterial mit einer Permeabilität µ = 50 an. Nach außen und innen wird die Kerneinheit 14k von Bereichen 28k begrenzt, die von Bereichen niedriger Dichte 90k gebildet werden. Die Elektronikeinheit 58k und die Spuleneinheit 12k werden bei der Herstellung der Kerneinheit 14k bezogen auf die Wicklungsachse 56k beidseitig der Bereiche 28k angeordnet und ebenfalls mit dem Bindemittel 22k der Kerneinheit 14k vergossen. Die Spuleneinheit 12k und die Elektronikeinheit 58k sind in die Kerneinheit 14k teilweise eingebettet und bilden das Spulenmodul 144k. Auf einer der Spuleneinheit 12k zugewandten Seite der Elektronikeinheit 58k ist eine leitende Materialschicht 110k mit einer Projektionsfläche 112k angeordnet, die bei einer Projektion in Richtung der Wicklungsachse 56k die Elektronikeinheit 58k überdeckt. Die Materialschicht 110k bildet eine Abschirmeinheit 108k, die ein von der Spuleneinheit 12k ausgehendes elektromagnetisches Wechselfeld gegenüber der Elektronikeinheit 58k abschirmt, die eine abzuschirmende Baugruppe 142k bildet.

Das Spulenmodul 144k ist dazu vorgesehen, wie im ersten Ausführungsbeispiel zur Bildung einer Spulenvorrichtung 10k in einen taschenartigen Aufnahmebereich einer Gehäuseeinheit in einer Einschubrichtung eingeschoben zu werden.

## Patentansprüche

1. Handwerkzeugakkupack (40a,b,d,g-j) mit einer Gehäuseeinheit (42a,b,g-j) in der eine Zelleneinheit (44a,b,d,g,i,j) und auf einer der Zelleneinheit (44a,b,d,g,i,j) gegenüberliegenden Seite eine Induktivladespulenvorrichtung (10a,b,d-k) insbesondere Handwerkzeuginduktivladespulenvorrichtung, angeordnet ist, wobei die Induktivladespulenvorrichtung (10a,b,d-k) ausgehend von der Zelleneinheit (44a,b,d,g,i,j) eine Leiterplatte (96a) mit einer Ladeelektronik aufweist, **dadurch gekennzeichnet, dass** angrenzend an die Leiterplatte (96a) wenigstens eine Kerneinheit (14a-k) und angrenzend an die Kerneinheit (14a-k) wenigstens eine Spuleneinheit (12a-k) aufweist, wobei die Kerneinheit (14a-k) zumindest teilweise von in einem Bindemittel (22a,b,e-h,k) eingebetteten mikroskopischen Kernelementen (24a-b,16b,16c, 16e-h,16j-k) gebildet wird.

2. Handwerkzeugakkupack nach Anspruch 1, **dadurch gekennzeichnet, dass** die Kerneinheit (14c) einen Kernmantel (26c) aufweist, der zu einer Fixierung der Kernelemente (16c) vorgesehen ist.

3. Handwerkzeugakkupack nach einem der vorhergehenden Ansprüche, **dadurch gekennzeichnet, dass** die Kerneinheit (14i) zumindest zwei Kernmaterialien (124i, 126i) aufweist, die differierende Permeabilitäten aufweisen.

4. Handwerkzeugakkupack nach einem der vorhergehenden Ansprüche, **dadurch gekennzeichnet, dass** die Kerneinheit (14i) zumindest zwei Kernmaterialien (124i, 126i) aufweist, die differierende Dichten und/oder Elastizitätsmodule aufweisen.

5. Handwerkzeugakkupack nach einem der vorhergehenden Ansprüche, **gekennzeichnet durch** eine Gehäuseeinheit (42g-h), in die die Kerneinheit (14g-h) eingegossen und/oder angespritzt ist.

6. Induktivladespulenvorrichtung nach einem der vorhergehenden Ansprüche, **gekennzeichnet durch** eine Gehäuseeinheit (42j) mit einem taschenartigen Aufnahmebereich (104j) für die Spuleneinheit (12j) und/oder die Kerneinheit (14j) und/oder eine Elektronikeinheit (16j).

7. Handwerkzeugakkupack nach einem der vorhergehenden Ansprüche, **dadurch gekennzeichnet, dass** die Kerneinheit eine plattenförmige Gestalt aufweist.

8. Handwerkzeugakkupack nach einem der Ansprüche 1 bis 6, **dadurch gekennzeichnet, dass** die Kerneinheit (14d) eine wannenförmige Gestalt aufweist.

9. Handwerkzeugakkupack nach einem der vorhergehenden Ansprüche, **dadurch gekennzeichnet, dass** eine durch die Kerneinheit (14a) geführte Kontaktierungseinheit (100a) die Ladeelektronik aufweisende Leiterplatte (96a) mit der Spuleneinheit (12a) verbindet.

10. Handwerkzeugakkupack nach einem der vorhergehenden Ansprüche, **dadurch gekennzeichnet, dass** die Leiterplatte (96a) mit der Ladeelektronik über einen Verbindungsleiter (48a) mit der Zelleneinheit (44a) verbunden ist.

11. Handwerkzeugakkupack nach einem der vorhergehenden Ansprüche, **dadurch gekennzeichnet, dass** die Spuleneinheit (12a) eine Leiterplatte (52a) mit beidseitig einer Trägerschicht (50a) angeordneten Leiterbahnen aufweist.

12. Handwerkzeugakkupack nach einem der Ansprüche 1 bis 10, **dadurch gekennzeichnet, dass** die Spuleneinheit (12a) eine Trägerschicht (50a) als Wicklungsträger für Wicklungen aufweist, wobei die Wicklungen aus zumindest einer auf den Wicklungsträger aufgewickelten Litze bestehen.

13. Verfahren zur Herstellung einer Kerneinheit (14a-i) eine Handwerkzeugakkupacks mit Induktivladespulenvorrichtung nach einem der Ansprüche 1 bis 12.

## Claims

1. Hand-held tool battery pack (40a,b,d,g-j) having a housing unit (42a,b,g-j) in which a cell unit (44a,b,d,g,i,j) and, on a side opposite the cell unit (44a,b,d,g,i,j), an inductive charging coil device (10a,b,d-k), in particular hand-held tool inductive charging coil device, is arranged, wherein the inductive charging coil device (10a,b,d-k), emanating from the cell unit (44a,b,d,g,i,j), has a circuit board (96a) having charging electronics, **characterized in that** has at least one core unit (14a-k) next to the circuit board (96a) and at least one coil unit (12a-k) next to the core unit (14a-k), wherein the core unit (14a-k) is formed at least partly by microscopic core elements (24a-b, 16b, 16c, 16e-h, 16j-k) embedded in a binder (22a,b,e-h,k).

2. Hand-held tool battery pack according to Claim 1, **characterized in that** the core unit (14c) has a core sheath (26c) that is intended to fasten the core elements (16c) .

3. Hand-held tool battery pack according to either of the preceding claims, **characterized in that** the core unit (14i) has at least two core materials (124i, 126i) that have differing permeabilities.

4. Hand-held tool battery pack according to one of the preceding claims, **characterized in that** the core unit (14i) has at least two core materials (124i, 126i) that have differing densities and/or moduli of elasticity.

5. Hand-held tool battery pack according to one of the preceding claims, **characterized by** a housing unit (42g-h) into which the core unit (14g-h) is cast and/or moulded.

6. Inductive charging coil device according to one of the preceding claims, **characterized by** a housing unit (42j) having a pocket-shaped receptacle region (104j) for the coil unit (12j) and/or the core unit (14j) and/or an electronic unit (16j).

7. Hand-held tool battery pack according to one of the preceding claims, **characterized in that** the core unit has a plate-shaped design.

8. Hand-held tool battery pack according to one of Claims 1 to 6, **characterized in that** the core unit (14d) has a trough-shaped design.

9. Hand-held tool battery pack according to one of the preceding claims, **characterized in that** a contact unit (100a) guided by the core unit (14a) connects the circuit board (96a), having charging electronics, to the coil unit (12a).

10. Hand-held tool battery pack according to one of the preceding claims, **characterized in that** the circuit board (96a) is connected to the cell unit (44a) by the charging electronics via a connecting conductor (48a).

11. Hand-held tool battery pack according to one of the preceding claims, **characterized in that** the coil unit (12a) has a circuit board (52a) with conductor tracks arranged on both sides of a carrier layer (50a).

12. Hand-held tool battery pack according to one of Claims 1 to 10, **characterized in that** the coil unit (12a) has a carrier layer (50a) as winding carrier for windings, wherein the windings consist of at least one strand wound on the winding carrier.

13. Method for producing a core unit (14a-i) of a hand-held tool battery pack having an inductive charging coil device according to one of Claims 1 to 12.

## Revendications

1. Bloc-batterie pour outil à main (40a, b, d, g-j), comprenant une unité de boîtier (42a, b, g-j) dans laquelle est disposée une unité de cellule (44a, b, g, i, j), et sur un côté opposé à l'unité de cellule (44a, b, d, g, i, j) est disposé un dispositif de bobine de charge inductive (10a, b, d-k), en particulier un dispositif de bobine de charge inductive pour outil à main, le dispositif de bobine de charge inductive (10a, b, d-k) présentant, en partant de l'unité de cellule (44a, b, d, g, i, j), une carte de circuit imprimé (96a) munie d'une électronique de charge, **caractérisé en ce que** présente à côté de la carte de circuit imprimé (96a) au moins une unité de noyau (14a-k) et à côté de l'unité de noyau (14a-k) au moins une unité de bobine (12a-k), l'unité de noyau (14a-k) étant formée au moins en partie par des éléments de noyau microscopiques (24a-b, 16b, 16c, 16e-h, 16j-k) incorporés dans un liant (22a, b, e-h, k).

2. Bloc-batterie pour outil à main selon la revendication 1, **caractérisé en ce que** l'unité de noyau (14c) présente une enveloppe de noyau (26c) qui est prévue pour fixer les éléments de noyau (16c).

3. Bloc-batterie pour outil à main selon l'une quelconque des revendications précédentes, **caractérisé en ce que** l'unité de noyau (14i) présente au moins deux matériaux de noyau (124i, 126i) qui présentent des perméabilités différentes.

4. Bloc-batterie pour outil à main selon l'une quelconque des revendications précédentes, **caractérisé en ce que** l'unité de noyau (14i) présente au moins deux matériaux de noyau (124i, 126i) qui présentent des densités et/ou modules élastiques différents.

5. Bloc-batterie pour outil à main selon l'une quelconque des revendications précédentes, **caractérisé par** une unité de boîtier (42g-h) dans laquelle l'unité de noyau (14g-h) est moulée et/ou surmoulée.

6. Dispositif de bobine de charge inductive selon l'une quelconque des revendications précédentes, **caractérisé par** une unité de boîtier (42j) ayant une zone de logement de type poche (104j) pour l'unité de bobine (12j) et/ou l'unité de noyau (14j) et/ou l'unité électronique (16j).

7. Bloc-batterie pour outil à main selon l'une quelconque des revendications précédentes, **caractérisé en ce que** l'unité de noyau présente une configuration en forme de plaque.

8. Bloc-batterie pour outil à main selon l'une quelconque des revendications 1 à 6, **caractérisé en ce que** l'unité de noyau (14d) présente une configuration en forme de cuvette.

9. Bloc-batterie pour outil à main selon l'une quelconque des revendications précédentes, **caractérisé en ce que** l'unité de mise en contact (100a) guidée à travers l'unité de noyau (14a) relie la carte de circuit (96a) munie de l'électronique de charge à l'unité de bobine (12a).

10. Bloc-batterie pour outil à main selon l'une quelconque des revendications précédentes, **caractérisé en ce que** la carte de circuit (96a) munie de l'électronique de charge est reliée à l'unité de cellule (44a) par un conducteur de connexion (48a).

11. Bloc-batterie pour outil à main selon l'une quelconque des revendications précédentes, **caractérisé en ce que** l'unité de bobine (12a) présente une carte de circuit imprimé (52a) munie de pistes conductrices disposées de chaque côté d'une couche de support (50a).

12. Bloc-batterie pour outil à main selon l'une quelconque des revendications 1 à 10, **caractérisé en ce que** l'unité de bobine (12a) présente une couche de support (50a) comme support d'enroulement pour des enroulements, les enroulements étant composés au moins en partie d'un toron enroulé sur le support d'enroulement.

13. Procédé de fabrication d'une unité de noyau (14ai) d'un bloc-batterie pour outil à main muni d'un dispositif de bobine de charge inductive selon l'une quelconque des revendications 1 à 12.
